# EUROPEAN PATENT APPLICATION

(11) **EP 4 727 234 A1**
(43) Date of publication of application: **15.04.2026**
(21) Application number: 23940099.7
(22) Date of filing: 08.06.2023
(51) Int. Cl.: H04W 72/0453

(54) **WIRELESS COMMUNICATION METHOD, FIRST DEVICE AND SECOND DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan Guangdong 523860 (CN); XU, Weijie, Dongguan Guangdong 523860 (CN)
(74) Representative: Aldridge, Henry Alexander
(86) International application number: PCT/CN2023/099039
(87) International publication number: WO 2024/250212

(57) **Abstract**

Provided in the embodiments of the present application are a wireless communication method, a first device and a second device. The method comprises: sending, on at least one second frequency domain resource in at least one first frequency domain resource, a first message to a second device, wherein the first frequency domain resource comprises one or more second frequency domain resources; receiving a second message sent by the second device; and on the basis of the second message, stopping sending the first message, or retransmitting the first message. In the embodiments, the first device sends the first message on the second frequency domain resource, which has a finer resource granularity than the first frequency domain resource, and stops sending or retransmits the first message on the basis of the received second message, such that compared with a solution of directly sending the first message on the first frequency domain resource, the method of the present application can not only achieve access of a huge quantity of first devices or information reporting of the first device, but also reduce communication time delay between the first device and the second device.

## Description

### TECHNICAL FIELD

Embodiments of the disclosure relate to the field of communications, and more particular to a method for wireless communication, a first device and a second device.

### BACKGROUND

A zero-power device has a low complexity and a low cost, may be maintenance-free and battery-free, may support power harvesting and/or back scattering, and may achieve a high-density and large-scale deployment at a low cost. In some typical scenarios such as logistics warehousing management, shopping in supermarkets or the like, access of a large number of zero-power devices are often required. For example, when a truck enters a warehouse, it needs to be able to quickly identify cargos on the truck without omissions. In this case, communications of a large number of zero-power devices may occur, which may cause that collision of data reported by the zero-power devices inevitably occur.

In a normal case, the collision problem may be solved by using anti-collision algorithms.

However, although a traditional anti-collision algorithm may achieve access of a huge number of zero-power devices or communications of the zero-power devices, it may cause excessive communication delay for the zero-power devices.

### SUMMARY

The embodiments of the disclosure provide a method for wireless communication, a first device and a second device, which may not only achieve access of a huge number of first devices or information reporting of the first devices, but also reduce communication delay between the first device and the second device.

According to a first aspect, an embodiment of the disclosure provides a method for wireless communication. The method is applied to a first device, and the method includes the following operations.

A first message is sent to a second device on at least one second frequency domain resource in at least one first frequency domain resource. The first frequency domain resource includes one or more second frequency domain resources.

A second message sent by the second device is received.

Sending the first message is stopped or the first message is retransmitted based on the second message.

According to a second aspect, an embodiment of the disclosure provides a method for wireless communication. The method is applied to a second device, and the method includes the following operations.

A first message sent by a first device is received on at least one second frequency domain resource in at least one first frequency domain resource. The first frequency domain resource includes one or more second frequency domain resources.

A second message is sent to the second device.

According to a third aspect, an embodiment of the disclosure provides a first device. The first device is configured to perform the method in the first aspect as mentioned above or implementations thereof. Specifically, the first device includes functional modules configured to perform the method in the first aspect as mentioned above or implementations thereof.

In an implementation, the first device may include a processing unit. The processing unit is configured to perform functions related to information processing. For example, the processing unit may be a processor.

In an implementation, the first device may include a sending unit and/or a receiving unit. The sending unit is configured to perform sending-related functions, and the receiving unit is configured to perform receiving-related functions. For example, the sending unit may be a sender or a transmitter, and the receiving unit may be a receiver or a receiving device. For another example, the first device is a communication chip, the sending unit may be an input circuit or interface of the communication chip, and the sending unit may be an output circuit or interface of the communication chip.

According to a fourth aspect, an embodiment of the disclosure provides a second device. The second device is configured to perform the method in the second aspect as mentioned above or implementations thereof. Specifically, the second device includes functional modules configured to perform the method in the second aspect as mentioned above or implementations thereof.

In an implementation, the second device may include a processing unit. The processing unit is configured to perform functions related to information processing. For example, the processing unit may be a processor.

In an implementation, the second device may include a sending unit and/or a receiving unit. The sending unit is configured to perform sending-related functions, and the receiving unit is configured to perform receiving-related functions. For example, the sending unit may be a sender or a transmitter, and the receiving unit may be a receiver or a receiving device. For another example, the second device is a communication chip, the receiving unit may be an input circuit or interface of the communication chip, and the sending unit may be an output circuit or interface of the communication chip.

According to a fifth aspect, an embodiment of the disclosure provides a first device, and the first device includes a transceiver, a processor and a memory. The memory is configured to store a computer program, and the processor is configured to call and run the computer program stored in the memory, to cause the transceiver and/or the processor to perform the method in the first aspect as mentioned above or implementations thereof.

In an implementation, there are one or more processors, and there are one or more memories.

In an implementation, the memory may be integrated with the processor, or the memory may be arranged separately from the processor.

In an implementation, the transceiver further includes a transmitter (sender) and a receiver (receiving device).

According to a sixth aspect, an embodiment of the disclosure provides a second device, and the second device includes a transceiver, a processor and a memory. The memory is configured to store a computer program, and the processor is configured to call and run the computer program stored in the memory, to cause the transceiver and/or the processor to perform the method in the second aspect as mentioned above or implementations thereof.

In an implementation, there are one or more processors, and there are one or more memories.

In an implementation, the memory may be integrated with the processor, or the memory may be arranged separately from the processor.

In an implementation, the transceiver includes a transmitter (sender) and a receiver (receiving device).

According to a seventh aspect, an embodiment of the disclosure provides a chip, and the chip is configured to implement the method in any one of the first and second aspects as mentioned above or implementations thereof. Specifically, the chip includes a processor. The processor is configured to call and run a computer program from a memory, to cause a device mounted with the chip to perform the method in any one of the first and second aspects as mentioned above or implementations thereof.

According to an eighth aspect, an embodiment of the disclosure provides a computer-readable storage medium. The computer-readable storage medium is configured to store a computer program. When the computer program is executed on a computer, the computer program enables the computer to perform the method in any one of the first and second aspects as mentioned above or implementations thereof.

According to a ninth aspect, an embodiment of the disclosure provides a computer program product including computer program instructions. The computer program instructions enable a computer to perform the method in any one of the first and second aspects as mentioned above or implementations thereof.

According to a tenth aspect, an embodiment of the disclosure provides a computer program. When the computer program is executed on a computer, the computer program enables the computer to perform the method in any one of the first and second aspects as mentioned above or implementations thereof.

Based on the above technical solutions, the method for wireless communication provided in the disclosure includes the following operations. A first device sends a first message to a second device on at least one second frequency domain resource in at least one first frequency domain resource. The first frequency domain resource includes one or more second frequency domain resources. The first device receives a second message sent by the second device. The first device stops sending the first message or retransmits the first message based on the second message. In the embodiments, the first device sends the first message on at least one second frequency domain resource with a finer resource granularity than that of the first frequency domain resource, and stops sending the first message or retransmits the first message based on the received second message. Compared with a solution where the first message is directly sent on the first frequency domain resource, the solution provides by the embodiments may not only achieve access of a huge number of first devices or information reporting of the first devices, but also reduce communication delay between the first device and the second device.

In particular, asset inventory, logistics tracking, warehousing management or the like are important application scenarios for zero-power devices (ambient power enabled devices). In these scenarios, a large number of zero-power devices usually send small data packets in a short time period, for example, sending only identifiers (IDs) of the zero-power devices or sending the IDs of the zero-power devices and the small data packets, and then collision between different zero-power devices may be inevitable. In the embodiments, the first device sends the first message on the second frequency domain resource with a finer resource granularity than that of the first frequency domain resource, which may not only meet transmission requirements of the small data packets, and then achieve transmission of the small data packets, but also reduce a probability of collision between different zero-power devices.

Furthermore, the first device determines whether to retransmit the first message based on the received second message, which may greatly reduce interference caused by the first device to first messages sent by other devices.

### BRIEF DESCRIPTION OF THE DRAWINGS

FIG. 1 is a schematic diagram of a communication system provided by an embodiment of the disclosure.
FIG. 2 is a schematic diagram of a zero-power communication system provided by an embodiment of the disclosure.
FIG. 3 is a schematic diagram of power harvesting provided by an embodiment of the disclosure.
FIG. 4 is a schematic diagram of back scattering provided by an embodiment of the disclosure.
FIG. 5 is a circuit schematic diagram of resistive load modulation provided by an embodiment of the disclosure.
FIG. 6 is a schematic diagram of Non Return Zero (NRZ) encoding provided by an embodiment of the disclosure.
FIG. 7 is a schematic diagram of unipolar Return to Zero (RZ) encoding provided by an embodiment of the disclosure.
FIG. 8 is a schematic diagram of Manchester encoding provided by an embodiment of the disclosure.
FIG. 9 is a schematic diagram of Miller encoding provided by an embodiment of the disclosure.
FIG. 10 is a schematic diagram of Differential Binary Phase (DBP) encoding provided by an embodiment of the disclosure.
FIG. 11 is a schematic diagram of differential encoding provided by an embodiment of the disclosure.
FIG. 12 is a schematic diagram of data 0, data 1, start of data frame (SOF), and end of data frame (EOF) in Pulse Interval Encoding (PIE) provided by an embodiment of the disclosure.
FIG. 13 is a schematic diagram of bi-phase space encoding (FM0) provided by an embodiment of the disclosure.
FIG. 14 is a schematic diagram of FM0 symbols and FM0 symbol sequences in bi-phase space encoding (FM0) provided by an embodiment of the disclosure.
FIG. 15 is an example of a time-frequency structure of a preamble of Narrow Band Internet of Things (NB-IoT) provided by an embodiment of the disclosure.
FIG. 16 is a schematic structural diagram of a preamble provided by an embodiment of the disclosure.
FIG. 17 is an example of channels and center frequency points in a frequency band of 2.4 GHz provided by an embodiment of the disclosure.
FIG. 18 is a schematic flowchart of a method for wireless communication provided by an embodiment of the disclosure.
FIG. 19 is an example of a first frequency domain resource and a second frequency domain resource provided by an embodiment of the disclosure.
FIG. 20 is an example of sending a first message by using a single second frequency domain resource provided by an embodiment of the disclosure.
FIG. 21 is an example of sending a first message by using multiple second frequency domain resources provided by an embodiment of the disclosure.
FIG. 22 is another example of sending a first message by using multiple second frequency domain resources provided by an embodiment of the disclosure.
FIG. 23 is an example where a length of a time window of a first message is equal to a time length of continuous frequency hopping of the first message provided by an embodiment of the disclosure.
FIG. 24 is an example where a length of a time window of a first message is greater than a time length of continuous frequency hopping of the first message provided by an embodiment of the disclosure.
FIG. 25 is an example of frequency domain resources used by a second message provided by an embodiment of the disclosure.
FIG. 26 is another example of frequency domain resources used by a second message provided by an embodiment of the disclosure.
FIG. 27 is an example of time domain positions among a first message, a second message and a third message provided by an embodiment of the disclosure.
FIG. 28 is a schematic block diagram of a first device provided by an embodiment of the disclosure.
FIG. 29 is a schematic block diagram of a second device provided by an embodiment of the disclosure.
FIG. 30 is a schematic block diagram of a communication device provided by an embodiment of the disclosure.
FIG. 31 is a schematic block diagram of a chip provided by an embodiment of the disclosure.

### DETAILED DESCRIPTION

The technical solutions in the embodiments of the disclosure will be described below with reference to the drawings.

The embodiments of the disclosure may be applied to various communication systems. For example, the communication systems to which the embodiments of the disclosure may be applied include, but are not limited to a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolutional system of NR, an LTE-based access to unlicensed spectrum (LTE-U) system, an NR-based access to unlicensed spectrum (NR-U) system, a Universal Mobile Communication System (UMTS), a Wireless Local Area Network (WLAN), Wireless Fidelity (WiFi), a next generation communication system, a zero-power communication system, a cellular Internet of Things (IoT), a cellular passive IoT, or other communication systems, etc.

The cellular IoT is a product of development by combining a cellular mobile communication network with an IoT, is also referred to as a passive cellular IoT, and consists of network devices and passive terminals. In the cellular passive IoT, a passive terminal may communicate with other passive terminals through a network device, or the passive terminal may communicate in a Device to Device (D2D) communication manner, and the network device only needs to send a carrier signal, that is, a power sourcing signal, to supply power to the passive terminal.

Generally speaking, a traditional communication system supports a limited number of connections and is easy to be implemented. However, with the development of communication technologies, a mobile communication system will not only support the traditional communication, but also support for example D2D communication, Machine to Machine (M2M) communication, Machine Type Communication (MTC), and Vehicle to Vehicle (V2V) communication, etc. The embodiments of the disclosure may also be applied to these communication systems.

It should be understood that the communication system in the embodiments of the disclosure may be applied to a Carrier Aggregation (CA) scenario, or a Dual Connectivity (DC) scenario, or a standalone (SA) network arrangement scenario. The embodiments of the disclosure do not limit spectrums to which the embodiments of the disclosure are applied. For example, the embodiments of the disclosure may be applied to a licensed spectrum or an unlicensed spectrum.

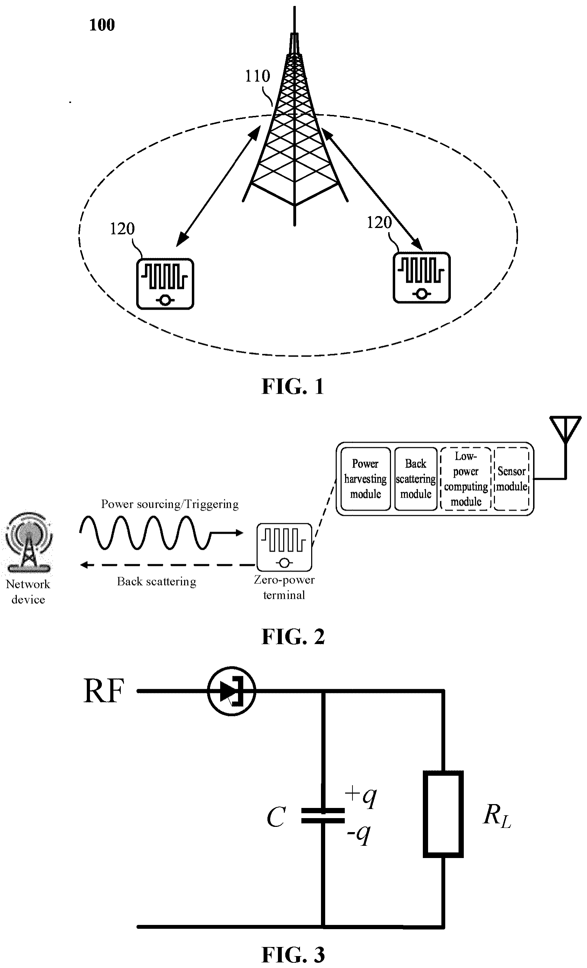

FIG. 1 is a schematic diagram of a communication system 100 provided by an embodiment of the disclosure.

As illustrated in FIG. 1, the communication system 100 may include a network device 110. The network device 110 may be a device communicating with terminal devices 120 (or referred to as communication terminals or terminals). The network device 110 may provide a communication coverage for a specific geographic area, and may communicate with terminal devices located in the coverage area.

Exemplarily, the network device 110 may be a device communicating with mobile devices. The network device 110 may be an Access Point (AP) in WLAN, a Base Transceiver Station (BTS) in GSM or CDMA, a NodeB (NB) in WCDMA, an evolutional Node B (eNB or eNodeB) in LTE, a relay station or AP, a vehicle-mounted device, a wearable device, a network device (Global Node B (gNB)) in an NR network, or a network device in a future evolved Public Land Mobile Network (PLMN) network, etc.

The network device 110 provides services for a cell, and the terminal devices 120 communicate with the network device through transmission resources used by the cell (such as frequency domain resources or spectrum resources). The cell may be a cell corresponding to the network device 110 (such as a base station), and the cell may belong to a macro base station, or may belong to a base station corresponding to a small cell. The small cell here may include a metro cell, a micro cell, a pico cell, a femto cell, etc. These small cells have characteristics of small coverage and low transmission power, and are suitable for providing high-speed data transmission services.

Exemplarily, the terminal device 120 may also be referred to as a User Equipment (UE), an access terminal, a user unit, a user station, a mobile station, a mobile platform, a remote station, a remote terminal, a mobile device, a user terminal, a terminal, a wireless communication device, a user agent, or a user device, etc. The terminal device may be a STAION (ST) in WLAN, a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing devices connected to a wireless modem, a vehicle-mounted device, a wearable device, a terminal device in a next-generation communication system such as an NR network, a terminal device in a future evolved PLMN network, or a zero-power device, etc.

For example, the terminal device 120 may be a wearable device. The wearable device may also be referred to as a wearable smart device, which is a general term for wearable devices developed by using wearable technologies to intelligently design daily wears, such as glasses, gloves, watches, clothes, shoes, etc. The wearable device is a portable device that is directly worn on the body or integrated into a user's clothes or accessories. The wearable device is not only a hardware device, but also achieves powerful functions through software support, data interaction and cloud interaction. The generalized wearable smart devices include full functions, large size, complete or partial functions that may be implemented without relying on smart phones, for example, smart watches, smart glasses or the like, and the generalized wearable smart device may only focus on certain application functions, and needs to be used together with other devices such as a smart phone, for example, various smart bracelets and smart jewelry for vital sign monitoring.

For another example, the terminal device 120 may be a zero-power device. The zero-power device may be understood as a device having a power consumption lower than a preset power consumption. For example, the zero-power device includes a passive terminal, or even includes a semi-passive terminal, etc.

It should be understood that FIG. 1 is only an example of the disclosure, and should not be understood as a limitation of the disclosure.

For example, in other alternative embodiments, the communication system 100 may include multiple network devices, and other number of terminal devices may be included within coverage of each network device. For another example, devices with communication functions in the network/system in the embodiments of the disclosure may be referred to as communication devices. Taking the communication system 100 illustrated in FIG. 1 as an example, the communication devices may include the network device 110 and terminal devices 120 with communication functions, and the network device 110 and the terminal devices 120 may be specific devices as described above, which will not be elaborated here. The communication system 100 may further include other communication devices, such as a network controller, other network entities such as a mobile management entity or the like, which is not specifically limited in the embodiments of the disclosure.

It should also be understood that in addition, a term "and/or" in the disclosure is only an association relationship describing associated objects, and represents that three relationships may exist. For example, A and/or B may represent three cases, that is, independent existence of A, existence of both A and B, and independent existence of B. A term "at least one" in the disclosure is only a combination relationship describing listed objects, and represents that one or more items may exist. For example, at least one of A, B or C may represent the following combinations: independent existence of A, independent existence of B, independent existence of C, existence of both A and B, existence of both A and C, existence of both B and C, and existence of A, B and C. A term "multiple" means two or more. A character "/" usually represents that previous and next associated objects form an "or" relationship.

Furthermore, a term "correspond" in the disclosure may represent that there is a direct or indirect correspondence between two objects, or may represent that there is an association relationship between two objects, or may represent a relationship between indicating and being indicated, or between configuring and being configured, etc. A term "indicate" in the disclosure may be a direct indication or an indirect indication, or may represent existence of an association relationship. For example, A indicates B, which may represent that A directly indicates B, for example, B may be obtained through A; or may represent that A indirectly indicates B, for example, A indicates C, B may be obtained through C; or may represent that there is an association relationship between A and B. A term "predefined" in the disclosure may be implemented by pre-storing the corresponding codes, tables, or other manners for indicating relevant information in the device (including, for example, the terminal device and the network device), and the specific implementations thereof are not limited in the disclosure. For example, "predefined" may refer to those defined in a protocol.

It should also be understood that in the embodiments of the disclosure, the "protocol" may refer to a standard protocol in the field of communications, for example, the protocol may include an LTE protocol, an NR protocol, WiFi, and relevant protocols applied to future communication systems, which is not limited in the disclosure. A term "when" may be interpreted as "if", "in the condition that...", "at the time...", "in response to", or other similar descriptions. Similarly, depending on the context, a phrase "if it is determined that..." or "if (a stated condition or event) is detected" may be interpreted as "when it is determined that...", "in response to determining...", "when (the stated condition or event) is detected", "in response to detecting (the stated condition or event)", or other similar descriptions.

In order to facilitate understanding the technical solutions provided in the disclosure, the zero-power device and relevant technologies will be described below.

The zero-power device is a Radio Frequency Identification (RFID) tag, which achieves a technology of contactless automatic transmission and identification of tag information by using spatial coupling of wireless Radio Frequency (RF) signals. The RFID tag is also referred to as a "RF tag" or an "electronic tag". The electronic tags may be divided according to different power supply modes into active electronic tags, passive electronic tags and semi-passive electronic tags. The active electronic tag, also known as an active tag, means that working power of the electronic tag is provided by battery, and the battery, memory and antenna together form the active electronic tag. Different from the passive radio frequency activation mode, the active electronic tag transmits information through the set frequency band before battery replacement. The passive electronic tag, also known as a passive tag, does not support a built-in battery. When the passive electronic tag approaches a reader/writer, an antenna of the electronic tag generates an induced current through electromagnetic induction if the tag is in the near field range formed by the radiation of an antenna of the reader/writer, and the induced current drives a chip circuit of the electronic tag. The chip circuit transmits the identification information stored in the tag to the reader/writer through the antenna of the electronic tag. The semi-passive electronic tag, also known as a semi-active electronic tag, inherits the advantages of small size, light weight, low price and long service life of the passive electronic tag. The built-in battery of the semi-passive electronic tag only provides power for a few circuits in the chip when there is no access of the reader/writer, and only when the reader/writer accesses, the built-in battery supplies power to the RFID chip, so as to increase the reading and writing distance of the tag and improve the reliability of communication.

A RFID system is a wireless communication system. The RFID system consists of two parts, that is, an electronic tag (TAG) and a reader/writer (Reader/Writer). The electronic tag includes coupled components and chips. Each electronic tag is provided with a unique electronic code, and is placed on a detected target to mark a target object. The reader/writer may not only read information on the electronic tag, but also write the information on the electronic tag, while provide the electronic tag with energy required for communication.

### (1) Communication based on zero-power device

FIG. 2 is a schematic diagram of a zero-power communication system provided in the disclosure.

As illustrated in FIG. 2, the zero-power communication system includes a network device and a zero-power terminal. The network device is configured to send a wireless power sourcing signal and a downlink communication signal to the zero-power terminal, and receive a back scattering signal from the zero-power terminal. A basic zero-power terminal includes a power harvesting module, a back scattering module, and a low-power computing module. Furthermore, the zero-power terminal may also be provided with a memory or a sensor, which is configured to store some basic information (such as item ID, etc.) or acquire sensor data such as ambient temperature, ambient humidity, etc.

Zero-power communication may also be referred to as zero-power terminal-based communication. Key technologies of the zero-power communication mainly include RF Power Harvesting and back scattering communication/ back scattering.

### 1. Power harvesting (RF Power Harvesting).

FIG. 3 is a schematic diagram of power harvesting provided by an embodiment of the disclosure.

As illustrated in FIG. 3, the power harvesting module may include a capacitor C and a resistor RL. The power harvesting module harvests space electromagnetic wave power based on the principle of electromagnetic induction, and then obtains the power required to drive the zero-power terminal, such as driving a low-power demodulation and modulation module, sensor and memory reading. Therefore, the zero-power terminal does not need a conventional battery. The principle of electromagnetic induction means that as long as magnetic flux passing through a closed circuit changes, an induced current is generated in the closed circuit. In combination with the disclosure, the capacitor C and the resistor RL may form a closed circuit. After receiving the RF, the RF power harvesting module may generate an induced current and store the generated induced current in the capacitor C to realize the harvesting of space electromagnetic wave power.

### 2. Back scattering communication (Back Scattering).

The zero-power communication terminal receives a wireless signal sent by the network, modulates the wireless signal, loads information required to be sent, and radiates the modulated signal from antennas. This information transmission process is referred to as back scattering. Back scattering is inseparable from load modulation functions. Load modulation adjusts and controls circuit parameters of an oscillation circuit of the zero-power device according to a beat of a data stream, such that parameters of the electronic tag such as an impedance or the like change accordingly, thereby completing a modulation process. Load modulation technologies mainly include two manners, that is, a resistive load modulation manner and a capacitive load modulation manner.

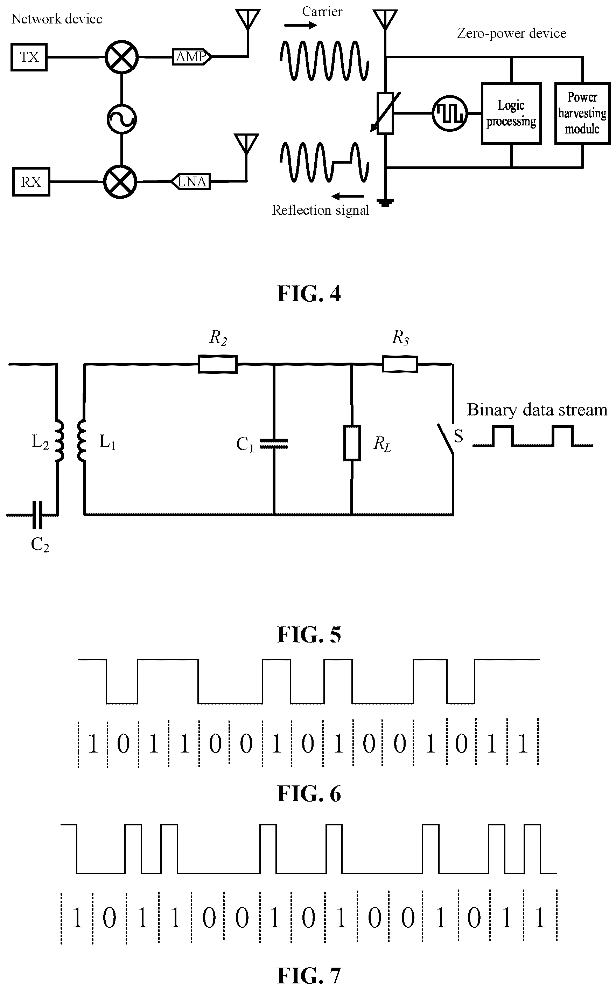

FIG. 4 is a schematic diagram of back scattering provided by an embodiment of the disclosure.

As illustrated in FIG. 4, when a network device is used as a sending side (TX), the network device sends a carrier to the zero-power device through an amplifier (AMP). Correspondingly, after receiving the carrier sent by the network device, the zero-power device drives a logic processing module using the power harvested by the power harvesting module to process information required to be sent, loads the information to be sent onto the received carrier through a variable resistor to obtain a reflection signal, and finally radiates the obtained reflection signal from antennas. This information transmission process is referred to as back scattering. Correspondingly, when the network device is used as a receiving side (RX), the network device may receive the reflection signal sent by the zero-power device through a low noise amplifier (LNA). Furthermore, in some possible implementations, each of the AMP and the LNA may be connected to a voltage display light, and an emergency light may be arranged between the voltage display lights connected to the AMP and he LNA respectively.

Further, the zero-power device may modulate the received carrier in the resistive load modulation manner. Specifically, the load is connected in parallel with a resistor, the resistor is turned on or off based on control of a binary data stream, and on and off of the resistor may cause voltage variation of the circuit, thereby achieving Amplitude Shift Keying (ASK) modulation, that is, signal modulation and transmission are achieved by adjusting an amplitude of a back scattering signal of the zero-power device. In other alternative embodiments, the zero-power device may modulate the received carrier in the capacitive load modulation manner. Specifically, the change in the resonant frequency of the circuit may be realized by turning on and off the capacitor, thereby achieving Frequency Shift Keying (FSK) modulation, that is, signal modulation and transmission are achieved by adjusting an operation frequency of the back scattering signal of the zero-power device.

It should be noted that the principle of back scattering illustrated in FIG. 4 is explained by using the zero-power device and the network device. In fact, any device with a back scattering function may implement the back scattering communication.

FIG. 5 is a circuit schematic diagram of resistive load modulation provided by an embodiment of the disclosure.

As illustrated in FIG. 5, in the resistive load modulation, a resistor R_{L} is connected in parallel with a resistor R₃, the resistor R_{L} may be referred to as a load modulation resistor, a branch where the resistor R_{L} and the resistor R₃ are located is turned on or off based on control of a switch S, the switch S may be controlled by a binary data stream, and on and off of the branch where the resistor R_{L} and the resistor R₃ are located may cause voltage variation of the circuit. Further, the resistor R_{L} may be connected in parallel with an inductor L₁ through a resistor R₂, and the inductor L₁ forms a resonant circuit with an inductor L₂. Based on this, on and off of the branch where the resistor R_{L} and the resistor R₃ are located may cause voltage variation of the circuit, which may in turn cause variation of resonant frequency of the resonant circuit, and finally achieve the ASK modulation, that is, signal modulation and transmission are achieved by adjusting an amplitude of a back scattering signal of the zero-power terminal. Further, the inductor L₂ may also be connected to a capacitor C₂, and the capacitor C₂ may convert the variation of resonant frequency of the resonant circuit into a signal to be sent by antennas. Similarly, in the capacitive load modulation, variation of resonant frequency of the resonant circuit may be achieved by on and off of a branch where a capacitor C₁ and the resistor R₃ are located, thereby achieving the FSK modulation, that is, signal modulation and transmission are achieved by adjusting an operation frequency of the back scattering signal of the zero-power terminal.

The zero-power terminal modulates an incoming signal by means of load modulation to implement the back scattering process. Therefore, the zero-power terminal has significant advantages as follows.
1. The terminal device does not transmit signals actively, and achieves the back scattering by modulating the incoming signal, therefore the terminal device does not require complex RF links such as a Power Amplifier (PA), a RF filter, etc.
2. The terminal is not required to generate high-frequency signals actively, therefore the terminal does not require a high-frequency crystal oscillator.
3. With the back scattering, signal transmission of the terminal does not need to consume energies of the terminal itself, and battery-free communication may be achieved.

It should be understood that the terminal device in the above communication system 100 may be a zero-power device (such as a passive terminal, or even a semi-passive terminal), and the terminal device may even be a non-zero-power device, such as an ordinary terminal; however, such ordinary terminal may perform back scattering in some cases.

### (2) Encoding method

Data transmitted by the zero-power terminal may represent binary "1" and "0" by using different forms of codes. The zero-power terminal usually uses one of the following coding methods: Non Return Zero (NRZ) encoding, Manchester encoding, unipolar Return to Zero (Unipolar RZ) encoding, Differential Binary Phase (DBP) encoding, or Miller encoding and differential encoding. In other words, 0 and 1 are represented by using different pulse signals.

### 1. NRZ encoding.

In the NRZ encoding, a high level is used to represent a binary "1" and a low level is used to represent a binary "0", which may be specifically illustrated in FIG. 6. A waveform illustrated in FIG. 6 does not provide a gap interval between code elements and transmits the code throughout the entire code element time, therefore it is referred to as the NRZ encoding.

### 2. Unipolar RZ encoding.

When a binary code "1" is sent, a positive current is sent; however, a duration of the positive current is shorter than a time width of a code element, that is, a narrow pulse is sent; when a binary code "0" is set, no current is sent at all. A rule of the unipolar RZ encoding is illustrated in FIG. 7. Specifically, when the NRZ encoding is compared with the unipolar RZ encoding, both of them use unipolar codes; however, a duty cycle of the NRZ encoding is 100%, and a duty cycle of the unipolar RZ encoding is 50%.

### 3. Manchester encoding.

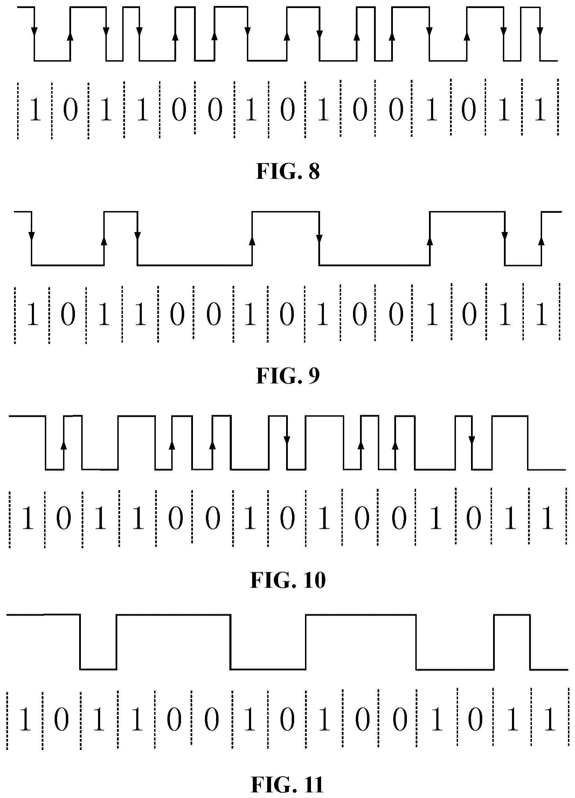

The Manchester encoding is also referred to as Split-Phase Encoding or bi-phase encoding. In the Manchester encoding, "1" and "0" are distinguished by using different phases of voltage hopping. "1" is represented by hopping from high to low voltages, and "0" is represented by hopping from low to high voltages. A rule of the Manchester encoding may be illustrated in FIG. 8.

### 4. Miller encoding.

The Miller encoding is an improved Manchester encoding. The Miller encoding represents binary "1" at any edge within half of a "bit period", and represents binary "0" by a level that is unchanged in a next "bit period". In other words, the Miller encoding represents data "1" with a level transition at the center of the bit, and represents data "0" without the level transition at the center of the bit. Furthermore, when binary "0" appears continuously, the level transition occurs at the end of this bit. A rule of the Miller encoding is illustrated in FIG. 9. The Miller encoding produces a level alternation at the beginning of the "bit period", and the bit beat is relatively easy to reconstruct for a receiver.

### 5. DBP encoding.

The DBP encoding represents binary "0" at any edge within half of a "bit period", and represents binary "1" when there is no edge. Furthermore, a phase of a level is inverted at the beginning of each "bit period". Therefore, it is easier to reconstruct a bit beat for a receiver. A rule of the DBP encoding may be illustrated in FIG. 10.

### 6. Differential encoding.

In the differential encoding, each binary "1" to be transmitted may cause variation of a signal level, while the signal level remains unchanged for binary "0". A rule of the differential encoding may be illustrated in FIG. 11.

### 7. Pulse Interval Encoding (PIE).

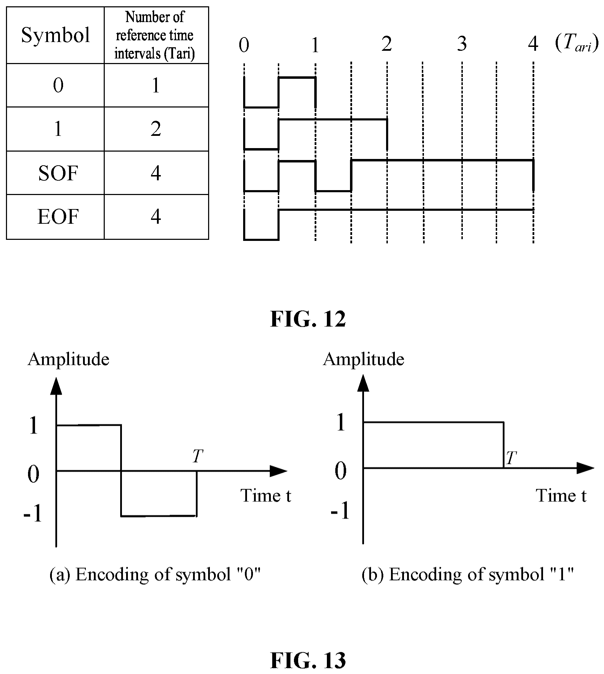

The PIE is an encoding method for the reader/writer to transmit data to the electronic tag. The PIE encoding is an encoding method in which "0" and "1" have different time intervals. The PIE encoding is based on a continuous pulse with a fixed interval, and a repetition period of the pulse is different according to "0" and "1". Usually, a continuous interval of each binary code is a multiple of a clock cycle. There are 4 symbols for the PIE encoding, which are data 0, data 1, start of data frame (SOF), and end of data frame (EOF) respectively, and their encoding symbols are 1, 2, 4 and 4 times of a reference time interval (Tari) respectively. Definitions of data 0, data 1, SOF and EOF are illustrated in FIG. 12. It may be seen that the PIE encoding may easily define cases other than data 0 and data 1. In order to determine a type of a transmitted symbol, the electronic tag needs to measure an interval of high/low pulse transition illustrated in FIG. 12.

### 8. Bi-phase space encoding (FM0).

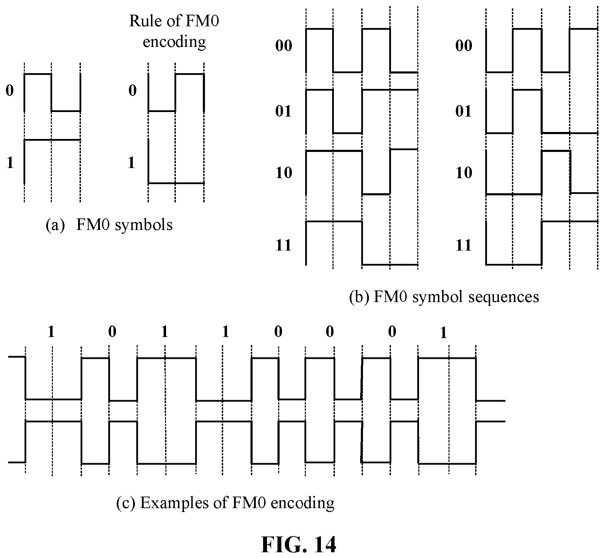

The Bi-phase space encoding (FM0) is an encoding method for the electronic tag to transmit data to the reader/writer. A rule of FM0 encoding is that: a level of symbol "0" changes at the middle and the edge of the time; a level of symbol "1" changes only at the edge of the time. The rule of FM0 encoding is illustrated in FIG. 13. Features of the FM0 encoding are that: the symbol "0" has 3 transitions, including a transition at a start position of the bit time and a transition at a middle position of the bit time; the symbol "1" has 1 transition, that is, a transition at a start position of the bit time. Examples of FM0 symbols, FM0 symbol sequences and the FM0 encoding may be illustrated in FIG. 14.

### (3) Application scenario of zero-power communication.

Due to significant advantages such as an extremely low cost, zero power consumption, a small size or the like, the zero-power communication may be widely used in various industries such as logistics for vertical industries, smart warehousing, smart agriculture, energy and electricity, industrial Internet, or the like, and may also be applied to personal applications such as smart wearable items, smart homes, etc.

### (4) Power sourcing signal and trigger signal in a zero-power communication system.

The zero-power terminal may harvest power based on the power sourcing signal.

Exemplarily, from the perspective of carriers of the power sourcing signal, the power sourcing signal may be a base station, a smart phone, a smart gateway, a charging station, a micro base station, etc. From the perspective of frequency bands, the power sourcing signal may be a low frequency signal, an intermediate frequency signal, a high frequency signal, etc. From the perspective of waveforms, the power sourcing signal may be a sine wave, a square wave, a triangular wave, a pulse, a rectangular wave, etc. The power sourcing signal may be a continuous wave or a discontinuous wave (that is, allowing interruption for a certain duration). The power sourcing signal may be a signal specified in a 3rd Generation Partnership Project (3GPP) standard. For example, the power sourcing signal may be a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), etc.

It should be noted that since the carrier signal sent by the network device may also provide power to the zero-power device, the carrier signal may also be referred to as the power sourcing signal.

The zero-power terminal may perform back scattering based on the received trigger signal.

Exemplarily, the trigger signal may be configured to schedule or trigger the back scattering of the zero-power terminal. The trigger signal carries scheduling information of the network device, or the trigger signal is a scheduling signaling or scheduling signal sent by the network device. From the perspective of carriers of the trigger signal, the trigger signal may be a base station, a smart phone, a smart gateway, etc. From the perspective of frequency bands, the trigger signal may be a low frequency signal, an intermediate frequency signal, a high frequency signal, etc. From the perspective of waveforms, the trigger signal may be a sine wave, a square wave, a triangular wave, a pulse, a rectangular wave, etc. The trigger signal may be a continuous wave or a discontinuous wave (that is, allowing interruption for a certain duration). The trigger signal may be a signal specified in the 3GPP standard. For example, the trigger signal may be a SRS, PUSCH, PRACH, PUCCH, PDCCH, PDSCH, PBCH, or the like; or, the trigger signal may be a new signal.

It should be noted that the power sourcing signal and the trigger signal may be one signal or two independent signals, which is not specifically limited in the disclosure.

For example, in a cellular network, since the zero-power device is not powered by battery, a power sourcing signal is required to be provided by the network device, such that the zero-power device obtains power, thereby performing corresponding communication processes. The signal for power supply (that is, the power sourcing signal) and the signal for information transmission (that is, the trigger signal) may be two signals or one signal. For another example, in a RFID technology, the power sourcing signal and the trigger signal may be one signal. In a cellular passive IoT technology, the power sourcing signal and the trigger signal may be two independent signals. These two signals may not be sent in the same frequency band. For example, the network device continuously or intermittently sends the power sourcing signal in a certain frequency band, the zero-power device harvests power, and after obtaining power, the zero-power device may perform corresponding communication processes, such as measurement, channel/signal reception, channel/signal transmission, etc.

### (5) Classification of zero-power terminals.

Based on power sources and usages of zero-power terminals, the zero-power terminals may be divided into the following types.

### 1. Passive zero-power terminal.

A zero-power device does not require a built-in battery. When the zero-power device is close to the network device (such as the reader/writer of the RFID system), the zero-power device is in a range of a near field formed by radiation of antennas of the network device. Therefore, antennas of the zero-power device generate an induced current through electromagnetic induction, and the induced current drives a low-power chip circuit of the zero-power device, so as to achieve operations such as demodulation of a signal of a forward link (downlink, a link from the network device to the zero-power device), modulation of a signal of a backward link (uplink, a link from the zero-power device to the network device), etc. For a backscattering link, the zero-power device transmit signals in a backscattering manner.

It may be seen that the passive zero-power device does not require a built-in battery to drive either the forward link or the backward link, and is a zero-power device in the true sense.

The passive zero-power device does not require a battery, and the RF circuit and baseband circuit of the passive zero-power device are very simple, for example, components such as a LNA, a PA, a crystal oscillator, an analog-to-digital conversion (ADC), etc., are not required. Therefore, the passive zero-power device has many advantages such as a small size, a light weight, a very low price, a long service life, etc.

The passive zero-power terminal may also support other power harvesting manners. By harvesting power from the environment (such as light energy, thermal energy, kinetic energy, mechanical energy, etc.), power for driving circuits may be obtained, and communication of the terminal device may be supported.

### 2. Semi-passive zero-power terminal.

A semi-passive zero-power device itself is not provided with a conventional battery, but may use a RF power harvesting module to harvest power of radio waves, or use a power harvesting module to harvest power from the environment (such as solar energy, thermal energy, mechanical vibration energy, etc.), and store the harvested power in an energy storage unit (such as a capacitor). After obtaining power, the energy storage unit may drive a low-power chip circuit of the zero-power device, so as to achieve operations such as demodulation of a signal of a forward link, modulation of a signal of a backward link, etc. For a backscattering link, the zero-power device transmit signals in a backscattering manner.

It may be seen that the semi-passive zero-power device does not require a built-in battery to drive either the forward link or the backward link. Although the semi-passive zero-power device uses power stored in the capacitor during operation, the power comes from radio power harvested by the power harvesting module. Therefore, the semi-passive zero-power device is also a zero-power device in the true sense.

The semi-passive zero-power device inherits many advantages of the passive zero-power device, and thus has many advantages such as a small size, a light weight, a very cheap price, a long service life, etc.

### 3. Active zero-power terminal.

Zero-power devices used in some scenarios may also be active zero-power devices. This type of terminal may be provided with a built-in battery (a conventional battery, such as a dry battery, a rechargeable lithium battery, etc.). The battery is configured to drive a low-power chip circuit of the zero-power device, so as to achieve operations such as demodulation of a signal of a forward link, modulation of a signal of a backward link, etc. However, for a backscattering link, the zero-power device transmit signals in a backscattering manner. Therefore, zero power consumption of this type of terminal is mainly reflected in the fact that signal transmission of the backward link does not require power of the terminal itself, instead, uses a backscattering manner. Although the active zero-power device uses a battery, power consumption of the active zero-power device is very low since it uses an ultra-low power communication technology, therefore service life of the battery may be greatly improved compared with existing technologies.

The active zero-power device is provided with a built-in battery to supply power to the RFID chip, to increase a reading/writing distance of the tag and improve reliability of communication. Therefore, the active zero-power device is applied to some scenarios with relatively high requirements in aspects such as communication distance, reading delay, etc.

Some zero-power terminals such as the semi-passive zero-power terminal or the active zero-power terminal, may have an active transmission capability, that is, in addition to performing communication in the backward link by back scattering, communication may be performed in the backward link by active transmission.

Furthermore, service types of zero-power terminals and other IoT service types will also be mainly uplink services. Therefore, the zero-power terminals may also be divided based on types of transmitters, and the zero-power terminals may be divided into the following types based on types of transmitters.

### 1. Zero-power device based on back scattering.

This type of zero-power device sends uplink data in the foregoing backscattering manner. This type of device is not provided with an active transmitter for active transmission, but provided with only a transmitter for back scattering. Therefore, when this type of terminal sends data, it requires the network device to provide a carrier, and this type of terminal device performs back scattering based on the carrier to achieve data transmission.

### 2. Zero-power device based on active transmitter.

This type of zero-power device transmits uplink data by using an active transmitter with an active transmission capability. Therefore, when this type of zero-power device sends data, the zero-power device may send data by using its own active transmitter without requiring the network device to provide a carrier. For example, active transmitters applicable to the zero-power device may be an ultra-low power ASK transmitter, an ultra-low power FSK transmitter, etc. Based on the existing implementations, when this type of transmitter transmits a 100 uw signal, its overall power consumption may be reduced to 400~600 uw.

### 3. Zero-power device with both back scattering and active transmitter.

This type of terminal may support both back scattering and an active transmitter. The terminal may determine which uplink signal transmission manner is used according to different cases (such as quantity of electricity, available ambient energy) or based on scheduling of the network device, that is, the terminal may determine whether the uplink signal is sent in the back scattering manner or actively sent by using the active transmitter.

### (6) Cellular passive IoT.

The cellular IoT is developed vigorously. For example, 3GPP has standardized IoT technologies such as Narrow Band Internet of Things (NB-IoT), MTC, Reduced Capability (RedCap), etc. However, there are still many scenarios where IoT communication requirements cannot be met by using existing technologies, main reasons thereof include the following aspects.

### 1. Severe communication environment.

Some IoT scenarios may face extreme environments such as high temperature, extremely low temperature, high humidity, high voltage, high radiation, or high-speed movement, etc. For example, these scenarios may be an ultra-high voltage transformer substation, track monitoring of a train moving in a high speed, ambient monitoring in a high and cold region, an industrial production line, etc. In these scenarios, existing IoT terminals will not operate due to limitations of operation environments of conventional power supplies. Furthermore, extreme operation environments are not beneficial for IoT maintenance, such as battery replacement.

### 2. Form requirement of terminal with extremely small size.

Some IoT communication scenarios such as traceability of foods, circulation of commodities, smart wearable items or the like, require the terminal to have an extremely small size to facilitate its use in these scenarios. For example, IoT terminals used for management of commodities in a circulation link usually use electronic tags, which are embedded in packages of the commodities in a very small form. For another example, light-weight wearable devices may improve the user's usage experience while meeting the user's requirements.

### 3. IoT communication requirement with extremely low cost.

Many IoT communication scenarios require costs of IoT terminals to be low enough, to enhance their competitiveness over other alternative technologies. For example, in logistics or warehousing scenarios, in order to facilitate management of a large number of commodities in circulation, a respective IoT terminal may be attached to each commodity, such that accurate management of entire process and full cycle of logistics may be achieved through communication between the terminal and a logistics network. These scenarios require prices of the IoT terminals to be competitive enough.

Therefore, in order to cover these unmet IoT communication requirements, it also needs to develop an ultra-low-cost, extremely-small-size, battery-free/maintenance-free IoT in the cellular network, and an IoT based on zero-power devices may exactly meet this requirement.

It should be additionally pointed out that the IoT based on zero-power devices may also be referred to as an Ambient power enabled IoT, which may also be abbreviated as an Ambient IoT.

Specifically, an Ambient IoT device refers to an IoT device that uses various ambient energy, such as RF energy, light energy, solar energy, thermal energy, mechanical energy, etc. The Ambient IoT device may not have an energy storage capacity, or may have a very limited energy storage capacity (for example, using a capacitor with a capacity of tens of microfarads (uF)).

The Ambient IoT device may be used in at least four scenarios as follows.
1. Object identification. For example, it is applied to logistics, management of products on a production line, and supply chain management.
2. Ambient monitoring. For example, it is applied to monitor temperature, humidity, and harmful gases in operation and natural environments.
3. Positioning. For example, it is applied to indoor positioning, intelligent object searching, and positioning of products on the production line.
4. Intelligent control. For example, it is applied to intelligent control of various electrical appliances in smart homes (turning on and off an air conditioner, adjusting temperature), and intelligent control of various facilities in agricultural greenhouses (automatic irrigation, fertilization).

### (7) Design of PRACH preamble of LTE NB-IoT system.

Considering power consumption and capability limitations of UEs, the PRACH preamble of the NB-IoT system uses a structure of single tone with frequency hopping, which has the following two advantages.
1. It has a small bandwidth, and a very low Peak to Average Power Ratio (PAPR). The PAPR may be made close to 0 by selecting appropriate parameters, and requirements on power consumption and amplifiers are low.
2. It assists the base station to perform Time Of Arrival (TOA) estimation.

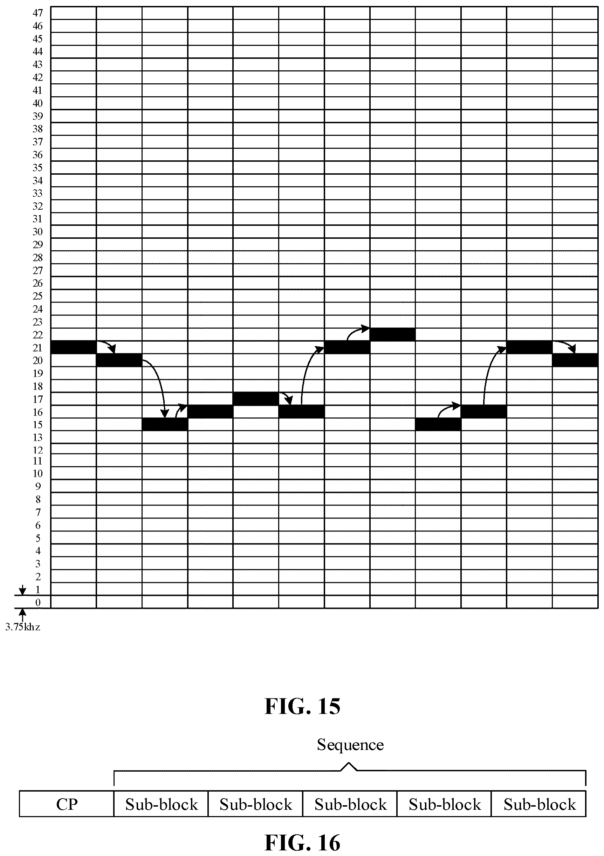

FIG. 15 is an example of a time-frequency structure of a preamble of NB-IoT provided by an embodiment of the disclosure.

As illustrated in FIG. 15, a channel bandwidth of the NB-IOT includes 4 Physical Resource Blocks (PRBs), with a total of 48 subcarriers (SCs) and a subcarrier spacing (SCS) of 3.75 kHz. A range of frequency hopping of each user's preamble is located in 12 consecutive SCs (a gray range). In a time domain, every 4 preambles are made as a repetition, and a rule of frequency hopping of these 4 preambles is that: 1 SC is spaced between 1^{st} and 2^{nd} preambles and between 3^{rd} and 4^{th} preambles respectively, which is referred to as first level hopping; 6 SCs are spaced between 2^{nd} and 3^{rd} preambles, which is referred to as second level hopping. Frequency hopping between different repetitions is determined by a specific random sequence.

FIG. 16 is a schematic structural diagram of a preamble provided by an embodiment of the disclosure.

As illustrated in FIG. 16, each preamble includes two parts, that is, a Cyclic Prefix (CP) and a sequence, and the sequence consists of 5 identical sub-blocks or symbols.

Assuming that the UE device sending the preamble is apart from the base station receiving the preamble by d meters, a corresponding propagation time t = d/c. According to the propagation principle of electromagnetic waves, phase variation of the carrier with a frequency f after propagating a distance of d meters is 2*pi*f*t = 2*pi*d/λ, here c = λf, λ is a wavelength of the carrier with the frequency f. Assuming that a frequency of a carrier of a wireless signal is f = 1 GHz, a period 2*pi of the phase variation corresponds to 1 ns (0.3 m), then there may be an integer ambiguity problem when delay/distance is measured by only a single frequency.

The principle of measuring the delay/distance by a dual-frequency phase difference is similar to the above descriptions, which measures a difference between phase variations of two frequency points (f1, f2). This is equivalent to a phase variation 2*pi*df*t corresponding to a carrier with a frequency df = f1 - f2. However, when the two frequency points are close enough, for example, a phase difference df =f1 - f2 = 500 kHz, a period 2*pi of the phase variation corresponds to 2 us (600 m), which means that there is no integer ambiguity problem in a range of 600 m.

Based on the above principles, a frequency hopping pattern of the NB-IoT preamble is designed with consideration of different possible TOA ranges (coverage of a cell in a corresponding range) and accuracy. The first level hopping has a small distance, which may ensure the TOA range. For example, for a cell radius of 35 km, a maximum propagation delay t = 11.666*10⁻⁵ s, and when df = 3.75 kHz, the phase variation is 3.5*10⁻². The second level hopping has a large distance, which is intended to improve measurement accuracy of the TOA.

### (8) Channel in WiFi.

The WiFi is a WLAN based on an Institute of Electrical and Electronics Engineers (IEEE) 802.11 standard. The WLAN has many standard protocols, such as an IEEE 802.11 protocol family, a HiperLAN protocol family, etc.

A channel list of the WLAN includes wireless channels that an IEEE 802.11 (or referred to as WiFi) wireless network should use, as required by law.

The 802.11 working group has divided two independent frequency bands, that is, 2.4 GHz and 4.9/5.8 GHz. Each frequency band is divided into several channels, and each country has made its own policy on how to use these frequency bands. Specific manners by which each country uses these frequency bands will be exemplarily given below with reference to Table 1.

**Table 1**

| Country | 2.4 GHz | 5 GHz (4.9/5.8) |
|---|---|---|
| China | 2.412~2.472 GHz: 13 channels | 5.725~5.825 GHz: 4 channels |
| America (Federal Communications Commission (FCC)) | 2.412~2.462 GHz: 11 channels | 5.15~5.35 GHz, 5.725~5.825 GHz: 12 channels |
| North America (except FCC) | 2.412~2.462 GHz: 11 channels | 5.15~5.35 GHz, 5.725~5.825 GHz: 12 channels |
| Europe (European Telecommunications Standards Institute (ETSI)) | 2.412~2.472 GHz: 13 channels | 5.15~5.35 GHz: 8 channels, 5470~5725 MHz: 11 channels |
| Israel | 2.432~2.472 GHz: 9 channels | 5.15~5.35 GHz: 8 channels |
| Japan | 2.412~2.472 GHz: 13 channels (Orthogonal Frequency Division Multiplexing (OFDM)) | 2.412~2.484 GHz: 14 channels (Complementary Code Keying (CCK)), 5.15~5.25 GHz: 4 channels |
| Japan 2 | 2.412~2.472 GHz: 13 channels (OFDM), 2.412~2.484 GHz: 14 channels | CCK 5.15~5.35 GHz: 8 channels |
| South Korea | 2.412~2.472 GHz: 13 channels | 5.15~5.35 GHz, 5.46~5.72 GHz, 5.725~5.825 GHz: 19 channels |
| Singapore | 2.412~2.472 GHz: 13 channels | 5.15~5.35 GHz, 5.725~5.825 GHz: 12 channels |
| Taiwan, China | 2.412~2.462 GHz: 11 channels | 5.25~5.35 GHz, 5.725~5.825 GHz: 7 channels |

As illustrated in Table 1, China divides a frequency band of 2.412~2.472 GHz into 13 channels, and divides a frequency band of 5.725~5.825 GHz into 4 channels.

For a channel in the frequency band of 2.4 GHz, an effective bandwidth of the channel is 20 MHz, and an actual bandwidth thereof is 22 MHz, with a guard band of 2 MHz.

**Table 2**

| Channel | Bandwidth (MHz) | Center frequency (MHz) |
|---|---|---|
| 1 | 20 | 2.412 (2.401~2.423) |
| 2 | 20 | 2.417 |
| 3 | 20 | 2.422 |
| 4 | 20 | 2.427 |
| 5 | 20 | 2.432 |
| 6 | 20 | 2.437 |
| 7 | 20 | 2.442 |
| 8 | 20 | 2.447 |
| 9 | 20 | 2.453 |
| 10 | 20 | 2.457 |
| 11 | 20 | 2.463 |
| 12 | 20 | 2.467 |
| 13 | 20 | 2.472 |
| 14 (not used in general) | 20 | 2.484 |

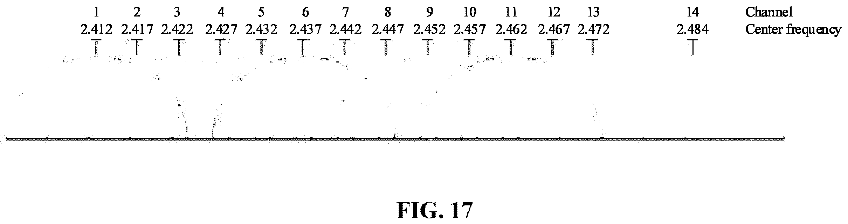

FIG. 17 is an example of channels and center frequency points in a frequency band of 2.4 GHz provided by an embodiment of the disclosure.

As illustrated in FIG. 17, for channels in the frequency band of 2.4 GHz, center frequency points of adjacent channels are spaced apart by 5 MHz, and there is frequency overlap between multiple adjacent channels. There are three groups of channels that do not interfere with each other, specifically, the first group includes channels 1, 6 and 11, the second group includes channels 2, 7 and 12, and the third group includes channels 3, 8 and 13.

### (9) Anti-collision processing.

In a normal case, multiple electronic tags may be simultaneously present in an operation range of a reader/writer, and the multiple electronic tags transmit data to the reader/writer simultaneously, which will cause collision of data of the electronic tags and make the reader/writer unable to read relevant data of each electronic tag normally. In wireless communication, there are four anti-collision methods for solving data collision, that is, Space Division Multiplexing, Frequency Division Multiplexing, Time Division Multiplexing, and Code Division Multiplexing respectively.

In a normal case, the collision problem may be solved by using anti-collision algorithms.

The anti-collision algorithms are mainly based on a TDMA algorithm, and may be divided into an Aloha anti-collision algorithm and a Binary Search (BS) algorithm.

The anti-collision algorithms may make system throughput and channel utilization higher, require fewer slots, and make data accuracy higher.

### 1. Polling method and BS method.

Both the polling method and the BS method are RFID anti-collision algorithms based on TDMA.

According to the polling method, an inquiry command containing a serial number is continuously sent to tags. After receiving the command, the tags detect whether the serial number in the command is the same as their own serial numbers. If the serial number in the command is different from their own serial numbers, the tags do not make responses. If the reader/writer does not receive a response within a specified time, the reader/writer may send an inquiry command containing another serial number, until there is a tag of which a serial number is a serial number meeting requirements, then data communication with the reader/writer is completed. It may be seen that this algorithm has a very low efficiency.

### 2. BS method.

According to the BS method, after receiving responses from the tags, the reader/writer detects a bit that causes collision, and sends a query command that may group the tags according to the detection. After receiving the command, a tag determines whether it is in a group that allows communication. If yes, the tag continues to make a response until there is only one tag, then data exchange with the reader/writer is completed. The process continues by analogy in this manner, until data exchange of all tags with the reader/writer is completed.

### 3. ALOHA algorithm.

A pure ALOHA algorithm is a random access or contention transmission process. The sending side may perform collision detection in a process of sending data, and compare the received data with data in a buffer, to know whether a data frame is damaged. If the sending side knows that the data frame is damaged (that is, the collision is detected), the sending side may resend the frame after waiting for a time of a random field.

According to a frame-slot ALOHA algorithm, an electronic tag randomly selects a slot in each frame to send data. All electronic tags must respond synchronously, that is, they may send information to the reader/writer only at the starting point of the slot, and the slot sent by each electronic tag is randomly selected.

### 4. Binary tree search algorithm.

Based on BS, there are a binary tree search algorithm and a pruning binary tree search algorithm. The basic idea of the BS is that: tags in collision are divided into two subsets 0 and 1, the subsets are queried, the tag is correctly identified if there is no collision, the subsets are split if there is a collision (for example, the subset "1" is divided into two subsets 00 and 01), until all tags in the subsets are identified.

It may be known from the above contents that the zero-power device (or referred to as the Ambient IoT device) has a simple structure, a low complexity and a low cost, and can support harvesting power from ambient energy (such as light energy, thermal energy, RF energy, mechanical energy, kinetic energy, etc.) to obtain energy required for communication. The zero-power device may be a device supporting at least one of a back scattering manner or an active transmission communication manner.

Since the zero-power device has characteristics of a low cost, maintenance-free or the like, it is expected to be widely used in scenarios such as asset inventory, logistics management, etc. For example, the zero-power device may be used as a tag/label to be attached to a surface of a cargo. In some typical scenarios such as logistics warehousing management, shopping in supermarkets or the like, access of a large number of Ambient IoT devices are often required. For example, when a truck enters a warehouse, it needs to be able to quickly identify cargos on the truck without omissions. In this case, communications of a large number of zero-power devices may occur, which may cause that collision of data reported by the zero-power devices inevitably occur. Although the above traditional anti-collision solution mechanism may achieve no omission of the labels, it may usually have a large delay. Therefore, it needs to introduce a new anti-collision solution mechanism in zero-power communication, which may not only achieve access of a huge number of zero-power devices or ID reporting of the zero-power devices, and then achieve asset inventory, logistics management or the like, to ensure that the zero-power devices are not missed, but also reduce communication delay of the zero-power devices.

In view of this, the disclosure provides a method for wireless communication, which may ensure that the zero-power devices are not missed and may reduce delay.

The method for wireless communication provided in the disclosure will be exemplarily described below with reference to the drawings.

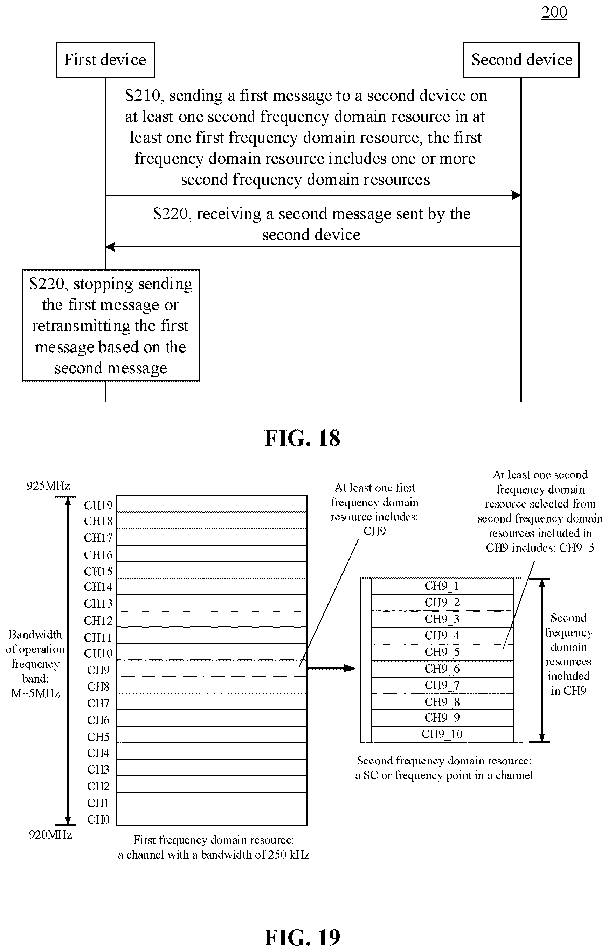

FIG. 18 is a schematic flowchart of a method for wireless communication 200 provided by an embodiment of the disclosure.

It should be understood that the method for wireless communication 200 may be interactively performed by a first device and a second device. The first device may be the terminal device 120 illustrated in FIG. 1. The second device may be the network device 110 illustrated in FIG. 1.

Exemplarily, the first device may be a station (STA).

Exemplarily, the first device may be a zero-power device.

The zero-power device may include a device based on ambient energy, such as an Ambient power enabled IoT (AMP IoT) device, a battery-free terminal, a maintenance-free terminal, etc. The AMP IoT device is also referred to as an Ambient IoT (A-IoT) device. The AMP IoT device has a simple structure, a low complexity and a low cost, and may support harvesting power from ambient energy (such as light energy, thermal energy, RF energy, mechanical energy, kinetic energy, etc.) to obtain energy required for communication. The AMP IoT device may not have an energy storage capacity, or may have a very limited energy storage capacity (for example, it uses a capacitor with a capacity of tens of microfarads (uF)). The zero-power device may be used as a communication device in WiFi or cellular network. From the perspective of power harvesting, the zero-power device may also be referred to as an energy harvesting device. A power supply device for the zero-power device is a device sending a power sourcing signal, which may be the same as a device sending data, such as a base station or AP, or may be a separate power supply device. The zero-power terminal may support a back scattering manner and/or an active transmission communication manner. The zero-power terminal may perform back scattering based on the received trigger signal. The trigger signal may be configured to schedule or trigger the back scattering of the zero-power terminal. The trigger signal carries scheduling information of the network device, or the trigger signal is a scheduling signaling or scheduling signal sent by the network device.

It should be noted that the power sourcing signal and the trigger signal may be one signal or two independent signals, which is not specifically limited in the disclosure.

For example, in a cellular network, since the zero-power device is not powered by battery, a power sourcing signal needs to be provided by the network device, such that the zero-power device obtains power, thereby performing corresponding communication processes. A signal for power supply (that is, the power sourcing signal) and a signal for information transmission (that is, the trigger signal) may be two signals or one signal. For another example, in a RFID technology, the power sourcing signal and the trigger signal may be one signal; and in a cellular passive IoT technology, the power sourcing signal and the trigger signal may be two independent signals. These two signals may not be sent in the same frequency band. For example, the network device continuously or intermittently sends the power sourcing signal in a certain frequency band, the zero-power device harvests power, and after obtaining power, the zero-power device may perform corresponding communication processes, such as measurement, channel/signal reception, channel/signal transmission, etc.

Exemplarily, the second device may be a network device/an AP device/a reader/writer, etc.

Exemplarily, the second device may communicate with a large number of AMP IoT devices (including the first device) simultaneously.

The solutions provided in the disclosure may be applied to application scenarios such as logistics management, warehousing management, asset inventory, cargo tracking, automatic vending, etc.

For example, when the first device is a zero-power device, logistics management and warehousing management are typical application scenarios of zero-power communication, where a large number of cargos need to be frequently transferred, stored, loaded, unloaded, and inventoried at a logistics site or warehouse. With the occurrence of ordering of the warehouse, putting cargos in the warehouse, cargo management, and taking cargos out of the warehouse, a large amount of warehousing information may be generated, and these pieces of information generally have characteristics of frequent data reading operations, high delay requirements, etc. The zero-power device itself has characteristics of an extremely low cost, a small size, maintenance-free, durability, a long service life or the like, and is particularly suitable for recording, saving and updating information of cargos in logistics and warehousing. Construction of a logistics and warehousing system of the IoT based on zero-power devices may further reduce operational costs and significantly improve efficiency of logistics management and warehousing management. For the logistics management and warehousing management, characteristics of the zero-power communication are mainly frequent and small data volumes, main communication requirements are to identify information of zero-power devices bound to the cargos (such as IDs of the zero-power devices) or information stored in the zero-power devices (such as IDs of the cargos stored in the zero-power devices), to achieve the logistics management and warehousing management, while a large amount of data transmission is not required.

As illustrated in FIG. 18, the method for wireless communication 200 may include the following operations in S210 to S230.

In S210, a first device sends a first message to a second device on at least one second frequency domain resource in at least one first frequency domain resource. The first frequency domain resource includes one or more second frequency domain resources.

In some embodiments, the first frequency domain resource is a resource corresponding to at least one of a channel, a system bandwidth, a carrier bandwidth, at least one Bandwidth Part (BWP), at least one PRB, at least one frequency point, or multiple SCs.

Exemplarily, when the first device is a zero-power device, communication between the first device and the second device is zero-power communication, and the first frequency domain resource may be a frequency domain resource obtained by dividing an operation frequency band of the zero-power communication (such as resources corresponding to a channel or multiple carriers). It is to be noted that the zero-power communication may be applied to a cellular system or a WiFi system, which is not specifically limited in the disclosure.

Exemplarily, the first frequency domain resource is an aggregation/set/binding of multiple BWPs. Or, the first frequency domain resource is an aggregation/set/binding of multiple PRBs. Or, the first frequency domain resource is an aggregation/set/binding of multiple frequency points. Or, the first frequency domain resource is an aggregation/set/binding of multiple SCs.

Exemplarily, when the first frequency domain resource is a resource corresponding to at least one frequency point, the first frequency domain resource may be a resource corresponding to multiple single-tone frequency points (single-tone) or a resource corresponding to at least one multi-tone frequency point (multi-tone). Single-tone corresponds to using only a single subcarrier in the frequency domain, and multi-tone corresponds to using multiple subcarriers in the frequency domain.

In some embodiments, the second frequency domain resource is a resource corresponding to at least one of a frequency point or a SC.

Exemplarily, when the first frequency domain resource is a channel, the second frequency domain resource is a resource corresponding to a (single) frequency point, or a resource corresponding to a (single) SC. When the first frequency domain resource is a resource corresponding to multiple frequency points, the second frequency domain resource is a resource corresponding to a (single) frequency point. When the first frequency domain resource is a resource corresponding to multiple SCs, the second frequency domain resource is a resource corresponding to a (single) SC. When the first frequency domain resource is a resource corresponding to multiple single-tone frequency points, the second frequency domain resource is a resource corresponding to a (single) single-tone frequency point. When the first frequency domain resource is a resource corresponding to a single multi-tone frequency point, the second frequency domain resource is a resource corresponding to a (single) SC. When the first frequency domain resource is a resource corresponding to multiple multi-tone frequency points, the second frequency domain resource is a resource corresponding to a (single) multi-tone frequency point, or a resource corresponding to a (single) SC.

Exemplarily, the at least one second frequency domain resource may be part or all of second frequency domain resources in the at least one first frequency domain resource.

In other words, when the first device sends the first message on the at least one first frequency domain resource, the first device may send the first message by using all the second frequency domain resources included in the at least one first frequency domain resource, or using part of the second frequency domain resources in the at least one first frequency domain resource. For example, when the at least one first frequency domain resource is a single first frequency domain resource, and the single first frequency domain resource consists of multiple SCs, the first device may send the first message by using one of the SCs, and the first device does not send data on other SCs; or, the first device may send the first message on each of the multiple SCs.

FIG. 19 is an example of a first frequency domain resource and a second frequency domain resource provided by an embodiment of the disclosure.

As illustrated in FIG. 19, assuming that the operation frequency band of the zero-power communication is a RFID frequency band of 920~925 MHz, the first frequency domain resource may be a frequency domain resource obtained by dividing the RFID frequency band of 920~925 MHz. For example, a system bandwidth of 5 MHz (920~925 MHz) may be divided into 20 channels each with a bandwidth of 250 kHz, that is, CH0~CH19. Each channel includes 10 SCs, for example, CH9 includes resources corresponding to 10 SCs (or 10 frequency points, etc.), that is, includes CH9_1~CH9_10. In combination with this embodiment, each channel with a bandwidth of 250 kHz may be used as the first frequency domain resource, and a resource corresponding to each SC (or frequency point, etc.) may be used as the second frequency domain resource.

Based on this, when the first device sends the first message to the second device on the at least one second frequency domain resource in the at least one first frequency domain resource, the at least one first frequency domain resource may be selected from CH0~CH10, and at least one resource corresponding to at least one SC (or frequency point, etc.) in the selected at least one frequency domain resource is selected as the at least one second frequency domain resource. For example, when the at least one first frequency domain resource includes CH9 from CH0~CH10, the at least one second frequency domain resource may include a resource corresponding to a SC or frequency point in CH9. For example, the at least one second frequency domain resource may include resources corresponding to CH9_5 or other SCs (or frequency points).

Exemplarily, the first message is a data packet sent by the first device when the first device communicates with the second device. The data packet is a small packet of data, and typically, for example, the data packet includes several bytes or tens of bytes of data.

Exemplarily, the second device receives the first message on the at least one second frequency domain resource, and performs processes such as identification of the first device, inventory of cargos associated with the first device, storage/update of logistics information of the cargos associated with the first device, etc.

Exemplarily, modulation manners used for the first message include, but are not limited to On-off Keying (OOK), FSK, ASK, Phase Shift Keying (PSK), or other modulation manners.

In S220, the first device receives a second message sent by the second device.

Exemplarily, modulation manners used for the second message include, but are not limited to OOK, FSK, ASK, PSK, or other modulation manners.

In S230, the first device stops sending the first message or retransmits the first message based on the second message.

Exemplarily, after receiving the first message, the second device may send the second message to the first device, such that the first device determines to stop sending the first message or retransmit the first message.

In this embodiment, the first device sends the first message on the second frequency domain resource with a finer resource granularity than that of the first frequency domain resource, and stops sending the first message or retransmits the first message based on the received second message. Compared with a solution where the first message is directly sent on the first frequency domain resource, this solution may not only achieve access of a huge number of first devices or information reporting of the first devices, but also reduce communication delay between the first device and the second device.

In particular, it is considered that asset inventory, logistics tracking, warehousing management or the like are important application scenarios for zero-power devices (ambient power enabled devices). In these scenarios, there are usually a large number of zero-power devices sending small data packets in a short time period, for example, sending only IDs of the zero-power devices or sending the IDs of the zero-power devices and the small data packets, and then collision may inevitably occur between different zero-power devices. In this embodiment, the first device sends the first message on the second frequency domain resource with a finer resource granularity than that of the first frequency domain resource, which may not only meet transmission requirements of the small data packets, and then achieve transmission of the small data packets, but also reduce a probability of collision between different zero-power devices.

Furthermore, the first device determines whether to retransmit the first message based on the received second message, which may greatly reduce interference caused by the first device to first messages sent by other devices.

In some embodiments, the at least one second frequency domain resource is a single second frequency domain resource, and the operation in S210 may include the following operation.

The first message is sent to the second device once on a single time domain resource on the single second frequency domain resource.

Exemplarily, the first device may encode, modulate, or perform resource mapping or other processes on the first message based on the single time domain resource on the single second frequency domain resource, to achieve a purpose of the first device sending the first message to the second device once on the single time domain resource of the single second frequency domain resource. In other words, the first device may use the single time domain resource on the single second frequency domain resource as a resource granularity for the first device to encode, modulate, or perform resource mapping or other processes on the first message, to achieve the purpose of the first device sending the first message to the second device once on the single time domain resource of the single second frequency domain resource.

For example, when the first frequency domain resource is a channel, the at least one second frequency domain resource may be a single SC (that is, the single second frequency domain resource is a single SC), and the first device may send the first message to the second device once on a single time domain resource on the single SC.

In some embodiments, the at least one second frequency domain resource is a single second frequency domain resource, and the operation in S210 may include the following operation.

The first message is sent to the second device multiple times on multiple time domain resources on the single second frequency domain resource.

Exemplarily, the first device may encode, modulate, or perform resource mapping or other processes on the first message based on the single time domain resource on the single second frequency domain resource, to achieve a purpose of the first device sending the first message to the second device multiple times on the multiple time domain resources of the single second frequency domain resource. In other words, the first device may use the single time domain resource on the single second frequency domain resource as a resource granularity for the first device to encode, modulate, or perform resource mapping or other processes on the first message, to achieve the purpose of the first device sending the first message to the second device multiple times on the multiple time domain resources of the single second frequency domain resource.

For example, when the first frequency domain resource is a channel, the at least one second frequency domain resource may be a single SC (that is, the single second frequency domain resource is a single SC), and the first device may send the first message to the second device multiple times using time division multiplexing on multiple time domain resources on the single SC.

It should be understood that the time domain resource involved in the embodiments may be a time unit which includes, but is not limited to a frame, a subframe, a slot, or a symbol, etc. Furthermore, "sending the first message multiple times" involved in the disclosure may be understood as sending in repetition, that is, receiving the second message sent by the second device after sending the first message repeatedly.

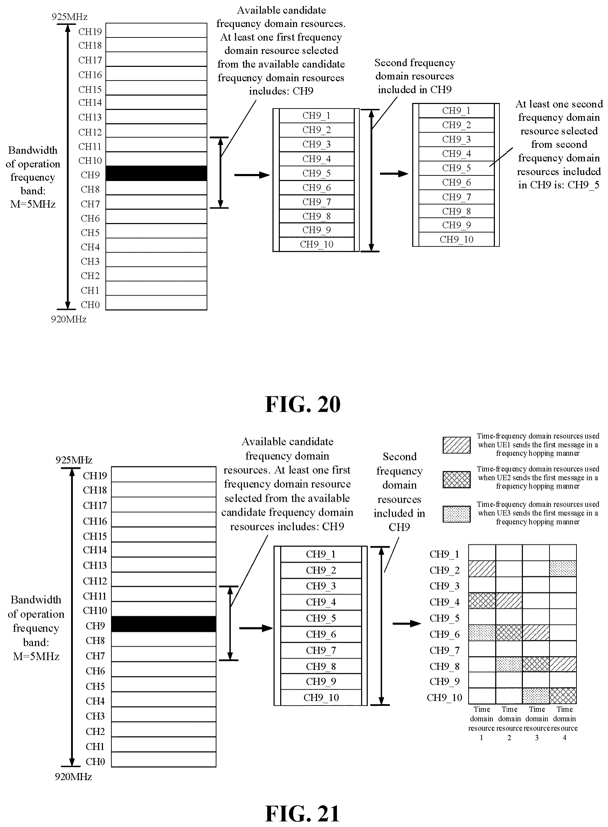

FIG. 20 is an example of sending a first message by using a single second frequency domain resource provided by an embodiment of the disclosure.

As illustrated in FIG. 20, assuming that the operation frequency band of the zero-power communication is a RFID frequency band of 920~925 MHz, the first frequency domain resource may be a frequency domain resource obtained by dividing the RFID frequency band of 920~925 MHz. For example, a system bandwidth of 5 MHz (920~925 MHz) may be divided into 20 channels each with a bandwidth of 250 kHz, that is, CH0~CH19. Each channel includes 10 SCs, for example, CH9 includes resources corresponding to 10 SCs (or 10 frequency points, etc.), that is, includes CH9_1~CH9_10. In combination with this embodiment, each channel with a bandwidth of 250 kHz may be used as the first frequency domain resource, and a resource corresponding to each SC (or frequency point, etc.) may be used as the second frequency domain resource. For example, the first device may send the first message on CH9_5 (that is, the at least one second frequency domain resource) in CH9 (that is, the at least one first frequency domain resource). For example, the first device may send the first message once on a single time domain resource of CH9_5 (that is, the at least one second frequency domain resource) in CH9 (that is, the at least one first frequency domain resource), or the first device may send the first message multiple times on multiple time domain resources of CH9_5 (that is, the at least one second frequency domain resource) in CH9 (that is, the at least one first frequency domain resource).

In some embodiments, the at least one second frequency domain resource includes multiple second frequency domain resources, and the operation in S210 may include the following operation.

The first message is sent to the second device multiple times on a single time domain resource on the multiple second frequency domain resources.

Exemplarily, the first device may encode, modulate, or perform resource mapping or other processes on the first message based on the single time domain resource on the single second frequency domain resource, to achieve a purpose of the first device sending the first message to the second device multiple times on the single time domain resource of the multiple second frequency domain resources. In other words, the first device may use the single time domain resource on the single second frequency domain resource as a resource granularity for the first device to encode, modulate, or perform resource mapping or other processes on the first message, to achieve the purpose of the first device sending the first message to the second device multiple times on the single time domain resource of the multiple second frequency domain resources.

Exemplarily, the first device may encode, modulate, or perform resource mapping or other processes on the first message based on a single time domain resource on a subset of the multiple second frequency domain resources, to achieve a purpose of the first device sending the first message to the second device multiple times on the single time domain resource of the multiple second frequency domain resources. In other words, the first device may use the single time domain resource on the subset of the multiple second frequency domain resources as a resource granularity for the first device to encode, modulate, or perform resource mapping or other processes on the first message, to achieve the purpose of the first device sending the first message to the second device multiple times on the single time domain resource of the multiple second frequency domain resources. The subset of the multiple second frequency domain resources may be one or at least two second frequency domain resources. The second frequency domain resources in the subset of the multiple second frequency domain resources may include second frequency domain resources in the same or different first frequency domain resources.

For example, when the first frequency domain resource is a channel, the at least one second frequency domain resource may include multiple SCs (that is, the multiple second frequency domain resources are multiple SCs), and the first device may send the first message to the second device multiple times using frequency division multiplexing on a single time domain resource on the multiple SCs.

In some embodiments, the at least one second frequency domain resource includes multiple second frequency domain resources, and the operation in S210 may include the following operation.

The first message is sent to the second device once on a single time domain resource on the multiple second frequency domain resources.

Exemplarily, the first device may encode, modulate, or perform resource mapping or other processes on the first message based on the single time domain resource on the multiple second frequency domain resources, to achieve a purpose of the first device sending the first message to the second device once on the single time domain resource of the multiple second frequency domain resources. In other words, the first device may use the single time domain resource on the multiple second frequency domain resources as a resource granularity for the first device to encode, modulate, or perform resource mapping or other processes on the first message, to achieve the purpose of the first device sending the first message to the second device once on the single time domain resource of the multiple second frequency domain resources.

For example, when the first frequency domain resource is a channel, the at least one second frequency domain resource may include multiple SCs (that is, the multiple second frequency domain resources are multiple SCs), and the first device may send the first message to the second device once on a single time domain resource on the multiple SCs.

In some embodiments, the at least one second frequency domain resource includes multiple second frequency domain resources, and the operation in S210 may include the following operation.

The first message is sent to the second device multiple times in a frequency hopping sending manner on multiple time domain resources on the multiple second frequency domain resources.

Exemplarily, the first device may encode, modulate, or perform resource mapping or other processes on the first message based on the single time domain resource on the single second frequency domain resource, to achieve a purpose of the first device sending the first message to the second device multiple times on the multiple time domain resources of the multiple second frequency domain resources. In other words, the first device may use the single time domain resource on the single second frequency domain resource as a resource granularity for the first device to encode, modulate, or perform resource mapping or other processes on the first message, to achieve the purpose of the first device sending the first message to the second device multiple times on the multiple time domain resources of the multiple second frequency domain resources.

Exemplarily, the first device may encode, modulate, or perform resource mapping or other processes on the first message based on a single time domain resource on a subset of the multiple second frequency domain resources, to achieve a purpose of the first device sending the first message to the second device multiple times on the multiple time domain resources of the multiple second frequency domain resources. In other words, the first device may use the single time domain resource on the subset of the multiple second frequency domain resources as a resource granularity for the first device to encode, modulate, or perform resource mapping or other processes on the first message, to achieve the purpose of the first device sending the first message to the second device multiple times on the multiple time domain resources of the multiple second frequency domain resources. The subset of the multiple second frequency domain resources may consist of one or at least two second frequency domain resources. The second frequency domain resources in the subset of the multiple second frequency domain resources may include second frequency domain resources in the same or different first frequency domain resources.

For example, when the first frequency domain resource is a channel, the at least one second frequency domain resource may include multiple SCs (that is, the multiple second frequency domain resources are multiple SCs), and the first device may send the first message to the second device multiple times in the frequency hopping sending manner on multiple time domain resources on the multiple SCs.

Of course, in other alternative embodiments, the second message may also be received in a frequency hopping manner. For example, if the first message is sent in a frequency hopping sending manner, the second message is received in a frequency hopping receiving manner. A solution where the first device receives the second message in the frequency hopping receiving manner may refer to a solution where the first device sends the first message in the frequency hopping sending manner as described below, which will not be elaborated below to avoid repetition.

Of course, in other alternative embodiments, the first device may also send the first message to the second device multiple times on multiple time domain resources on the multiple second frequency domain resources, without using the frequency hopping sending manner. For example, the first device may encode, modulate, or perform resource mapping or other processes on the first message based on a single time domain resource on the multiple second frequency domain resources, to achieve a purpose of the first device sending the first message to the second device multiple times on the multiple time domain resources of the multiple second frequency domain resources. In other words, the first device may use the single time domain resource on the multiple second frequency domain resources as a resource granularity for the first device to encode, modulate, or perform resource mapping or other processes on the first message, to achieve the purpose of the first device sending the first message to the second device multiple times on the multiple time domain resources of the multiple second frequency domain resources. Furthermore, in the above embodiments, the first device may encode, modulate, or perform resource mapping or other processes on the first message based on a single time domain resource on a single second frequency domain resource (or a subset of multiple second frequency domain resources), however, the disclosure is not limited thereto. For example, in other alternative embodiments, the first device may also encode, modulate, or perform resource mapping or other processes on the first message based on at least two time domain resources on a single second frequency domain resource (or a subset of multiple second frequency domain resources). In other words, the first device may use the at least two time domain resources on the single second frequency domain resource (or the subset of multiple second frequency domain resources) as a resource granularity for the first device to encode, modulate, or perform resource mapping or other processes on the first message, which is not specifically limited in the disclosure.

In some embodiments, the multiple second frequency domain resources include a second frequency domain resource in a single one of the at least one first frequency domain resource.

Exemplarily, the first device sends the first message to the second device multiple times in the frequency hopping sending manner on different second frequency domain resources in the single first frequency domain resource.

For example, when the first frequency domain resource is a channel, the multiple second frequency domain resources may be multiple SCs, that is, the multiple SCs may include a SC in a single one of at least one channel.

FIG. 21 is an example of sending a first message by using multiple second frequency domain resources provided by an embodiment of the disclosure.

As illustrated in FIG. 21, assuming that the operation frequency band of the zero-power communication is a RFID frequency band of 920~925 MHz, the first frequency domain resource may be a frequency domain resource obtained by dividing the RFID frequency band of 920~925 MHz. For example, a system bandwidth of 5 MHz (920~925 MHz) may be divided into 20 channels each with a bandwidth of 250 kHz, that is, CH0~CH19. Each channel includes 10 SCs, for example, CH9 includes resources corresponding to 10 SCs (or 10 frequency points, etc.), that is, includes CH9_1~CH9_10. In combination with this embodiment, each channel with a bandwidth of 250 kHz may be used as the first frequency domain resource, and a resource corresponding to each SC (or frequency point, etc.) may be used as the second frequency domain resource. For example, the first device may send the first message to the second device multiple times in the frequency hopping sending manner on resources (that is, multiple second frequency domain resources) corresponding to multiple SCs (or frequency points) in CH9 (that is, the at least one first frequency domain resource is a single first frequency domain resource).

For example, UE1 may send the first message to the second device multiple times in the frequency hopping sending manner on CH9_2, CH9_4, CH9_6 and CH9_8 (that is, multiple second frequency domain resources) in CH9 (that is, the at least one first frequency domain resource). UE2 may send the first message to the second device multiple times in the frequency hopping sending manner on CH9_4, CH9_6, CH9_8 and CH9_10 (that is, multiple second frequency domain resources) in CH9 (that is, the at least one first frequency domain resource). UE3 may send the first message to the second device multiple times in the frequency hopping sending manner on CH9_6, CH9_8, CH9_10 and CH9_2 (that is, multiple second frequency domain resources) in CH9 (that is, the at least one first frequency domain resource).

In some embodiments, when the at least one first frequency domain resource includes multiple first frequency domain resources, the multiple second frequency domain resources include frequency domain resources in part or all of the multiple first frequency domain resources.

Exemplarily, the first device sends the first message to the second device multiple times in the frequency hopping sending manner on the multiple first frequency domain resources. For example, the first device sends the first message to the second device multiple times in the frequency hopping sending manner on second frequency domain resources in different first frequency domain resources from the multiple first frequency domain resources.

For example, when the multiple first frequency domain resources are multiple channels, the multiple second frequency domain resources may be multiple SCs, that is, the multiple SCs may include SCs in part of the multiple channels, or the multiple SCs may include SCs in all (that is, each) of the multiple channels.

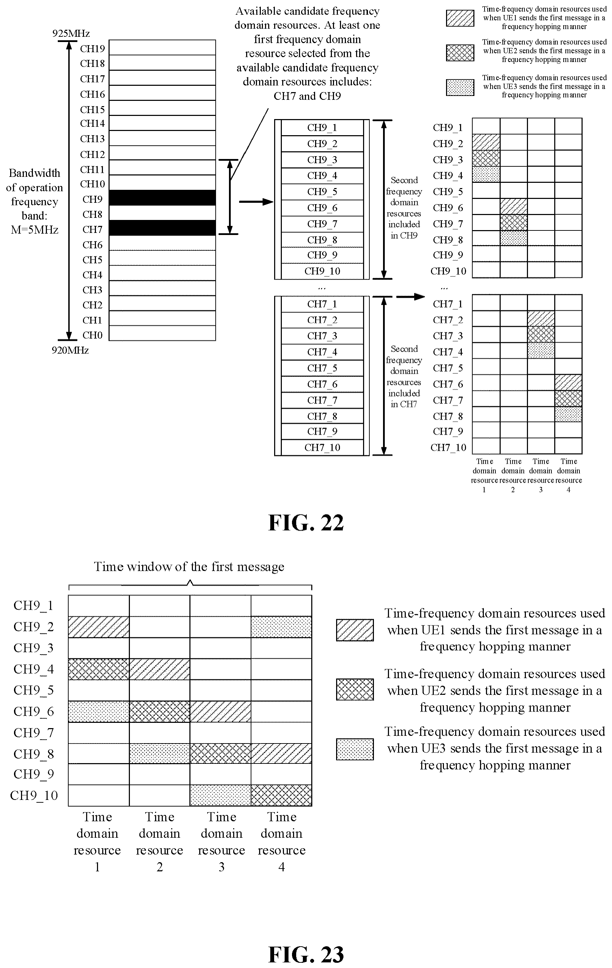

FIG. 22 is another example of sending a first message by using multiple second frequency domain resources provided by an embodiment of the disclosure.

As illustrated in FIG. 22, assuming that the operation frequency band of the zero-power communication is a RFID frequency band of 920~925 MHz, the first frequency domain resources may be frequency domain resources obtained by dividing the RFID frequency band of 920~925 MHz. For example, a system bandwidth of 5 MHz (920~925 MHz) may be divided into 20 channels each with a bandwidth of 250 kHz, that is, CH0~CH19. Each channel includes 10 SCs, for example, CH9 includes resources corresponding to 10 SCs (or 10 frequency points, etc.), that is, includes CH9_1~CH9_10. In combination with this embodiment, each channel with a bandwidth of 250 kHz may be used as the first frequency domain resource, and a resource corresponding to each SC (or frequency point, etc.) may be used as the second frequency domain resource. For example, the first device may send the first message to the second device multiple times in the frequency hopping sending manner on resources (that is, multiple second frequency domain resources) corresponding to multiple SCs (or frequency points) in CH7 and CH9 (that is, the at least one first frequency domain resource includes multiple first frequency domain resources).

For example, UE1 may send the first message to the second device multiple times in the frequency hopping sending manner on CH9_2, CH9_6, CH7_2 and CH7_6 (that is, multiple second frequency domain resources) in CH7 and CH9. UE2 may send the first message to the second device multiple times in the frequency hopping sending manner on CH9_3, CH9_7, CH7_7 and CH7_7 (that is, multiple second frequency domain resources) in CH7 and CH9. UE3 may send the first message to the second device multiple times in the frequency hopping sending manner on CH9_4, CH9_8, CH7_4 and CH7_8 (that is, multiple second frequency domain resources) in CH7 and CH9.

In some embodiments, when the at least one first frequency domain resource includes multiple first frequency domain resources, second frequency domain resources belonging to different first frequency domain resources from the multiple second frequency domain resources are located at the same or different positions in corresponding first frequency domain resources.

For example, when the multiple first frequency domain resources are multiple channels, the multiple second frequency domain resources may be multiple SCs, that is, SCs from the multiple SCs belonging to different channels are located at the same or different positions in corresponding channels.

In combination with FIG. 22, taking UE1 as an example, UE1 may send the first message to the second device multiple times in the frequency hopping sending manner on CH9_2, CH9_6, CH7_2 and CH7_6 (that is, multiple second frequency domain resources) in CH7 and CH9. Positions of CH9_2 and CH9_6 in CH9 are the same as positions of CH7_2 and CH7_6 in CH7. Of course, FIG. 22 is only an example of the disclosure. In other embodiments, UE1 may send the first message to the second device multiple times in the frequency hopping sending manner on SCs (that is, multiple second frequency domain resources) at different positions in CH7 and CH9.

Exemplarily, assuming that the multiple second frequency domain resources include a second frequency domain resource A-1 in a first frequency domain resource A and a second frequency domain resource B-1 in a first frequency domain resource B, a position of the second frequency domain resource A-1 in the first frequency domain resource A may be the same as or different from a position of the second frequency domain resource B-1 in the first frequency domain resource B. In other words, a position of the second frequency domain resource A-1 relative to the first frequency domain resource A may be the same as or different from a position of the second frequency domain resource B-1 relative to the first frequency domain resource B, which is not specifically limited in the disclosure.

In other embodiments, UE1 may perform CH-level frequency hopping in CH7 and CH9, and may not perform frequency hopping in each CH. For example, UE1 sends the first message by using one second frequency domain resource in CH7 and CH9 respectively. For another example, in CH7 and CH9, UE1 sends the first message by using multiple second frequency domain resources in CH7 and CH9 respectively (mapping of the first message is performed by using the multiple second frequency domain resources, instead of performing frequency hopping).

In some embodiments, a frequency hopping number of the first message is predefined, indicated by the second device, determined by the first device based on a predefined rule, or determined by agreement between the first device and the second device.

Exemplarily, the first device sends the first message to the second device multiple times in the frequency hopping sending manner based on the frequency hopping number of the first message. The frequency hopping number of the first message is predefined, indicated by the second device, determined by the first device based on the predefined rule, or determined by agreement between the first device and the second device. For example, the first device may determine a frequency hopping pattern of the first message based on the frequency hopping number of the first message, and then send the first message to the second device in a frequency hopping manner based on the frequency hopping pattern of the first message.

It is to be noted that implementations of determining the frequency hopping pattern of the first message based on the frequency hopping number of the first message are not specifically limited in the embodiments.

For example, the first device may determine a pattern corresponding to the frequency hopping number of the first message and a number of second frequency domain resources used by the first message (that is, a number of the at least one second frequency domain resource) as the frequency hopping pattern of the first message, according to a predefined mapping relationship based on the frequency hopping number of the first message and the number of second frequency domain resources used by the first message. For another example, in case that the frequency hopping number of the first message and the second frequency domain resources used by the first message are determined, the first device may generate the frequency hopping pattern of the first message in a predefined pattern generation manner based on the frequency hopping number of the first message and the second frequency domain resources used by the first message.

Exemplarily, the frequency hopping number of the first message may be predefined. For example, the frequency hopping number of the first message may be implemented by pre-storing corresponding codes and tables in devices (for example, including the first device and the second device) or other manners for indicating relevant information. The frequency hopping number of the first message may be agreed by a protocol. The "protocol" may refer to a standard protocol in the field of communications, for example, including an LTE protocol, an NR protocol, WiFi, and relevant protocols applied to future communication systems. The frequency hopping number of the first message may be indicated by the second device (for example, it may be semi-statically configured, or dynamically configured, or preempted and indicated by the second device to the first device). For example, before sending the first message to the second device, the first device may receive a signal that is sent by the second device and includes information for indicating the frequency hopping number of the first message. The frequency hopping number of the first message may be determined by the first device based on the predefined rule. For example, the first device may determine a number of times corresponding to a number of second frequency domain resources used by the first message (that is, a number of the at least one second frequency domain resource) as the frequency hopping number of the first message, according to a predefined mapping relationship based on the number of second frequency domain resources used by the first message. The frequency hopping number of the first message may be determined by agreement between the first device and the second device. For example, before sending the first message to the second device, the first device may agree on the frequency hopping number of the first message with the second device through a handshake mechanism.

In some embodiments, a frequency hopping pattern of the first message is predefined, indicated by the second device, determined by the first device based on a predefined rule, or determined by agreement between the first device and the second device.

Exemplarily, the frequency hopping pattern of the first message may be predefined. For example, the frequency hopping pattern of the first message may be implemented by pre-storing corresponding codes and tables in devices (for example, including the first device and the second device) or other manners for indicating relevant information. The frequency hopping pattern of the first message may be agreed by a protocol. The "protocol" may refer to a standard protocol in the field of communications, for example, including an LTE protocol, an NR protocol, WiFi, and relevant protocols applied to future communication systems. The frequency hopping pattern of the first message may be indicated by the second device (for example, it may be semi-statically configured, or dynamically configured, or preempted and indicated by the second device to the first device). For example, before sending the first message to the second device, the first device may receive a signal that is sent by the second device and includes information for indicating the frequency hopping pattern of the first message. The frequency hopping pattern of the first message may be determined by the first device based on the predefined rule. For example, the first device may determine a number of times corresponding to a number of second frequency domain resources used by the first message (that is, a number of the at least one second frequency domain resource) as the frequency hopping pattern of the first message, according to a predefined mapping relationship based on the frequency hopping number of the first message and the number of second frequency domain resources used by the first message. For another example, in case that the frequency hopping number of the first message and the second frequency domain resources used by the first message are determined, the first device may generate the frequency hopping pattern of the first message in a predefined pattern generation manner based on the frequency hopping number of the first message and the second frequency domain resources used by the first message. The frequency hopping pattern of the first message may be determined by agreement between the first device and the second device. For example, before sending the first message to the second device, the first device may agree on the frequency hopping pattern of the first message with the second device through a handshake mechanism.

In some embodiments, the first device sends the first message to the second device using the frequency hopping sending manner based on a pattern selected from multiple patterns of the multiple second frequency domain resources.

In some embodiments, the multiple patterns are predefined, indicated by the second device, determined by the first device based on a predefined rule, or determined by agreement between the first device and the second device.

Exemplarily, the multiple patterns may be predefined. For example, the multiple patterns may be implemented by pre-storing corresponding codes and tables in devices (for example, including the first device and the second device) or other manners for indicating relevant information. The multiple patterns may be agreed by a protocol. The "protocol" may refer to a standard protocol in the field of communications, for example, including an LTE protocol, an NR protocol, WiFi, and relevant protocols applied to future communication systems. The multiple patterns may be indicated by the second device (for example, they may be semi-statically configured, or dynamically configured, or preempted and indicated by the second device to the first device). For example, before sending the first message to the second device, the first device may receive a signal that is sent by the second device and includes information for indicating the multiple patterns. The multiple patterns may be determined by the first device based on the predefined rule. For example, the first device may generate the multiple patterns in a predefined pattern generation manner based on a number of second frequency domain resources in one first frequency domain resource. The multiple patterns may be determined by agreement between the first device and the second device. For example, before sending the first message to the second device, the first device may agree on the multiple patterns with the second device through a handshake mechanism.

Exemplarily, the first device may also select the frequency hopping pattern of the first message from the multiple patterns based on at least one of: an ID of the first device; an ID of a device group to which the first device belongs; an ID of the second device; a pattern randomly selected from the multiple patterns; a predefined pattern from the multiple patterns; or a pattern from the multiple patterns indicated by the second device.

For example, the first device may select the frequency hopping pattern of the first message from the multiple patterns based on a calculation result obtained by performing a modulo operation on the ID of the first device (which may also be the ID of the device group to which the first device belongs, or the ID of the second device) and the multiple patterns. For another example, the first device may determine the pattern randomly selected from the multiple patterns (which may also be the predefined pattern from the multiple patterns, or the pattern from the multiple patterns indicated by the second device) as the frequency hopping pattern of the first message.

In some embodiments, a second frequency domain resource corresponding to an i-th hopping of the first message in the first frequency domain resource is determined according to at least one of: an ID of the first device; an ID of a device group to which the first device belongs; an ID of the second device; a second frequency domain resource randomly selected from the at least one first frequency domain resource; a predefined second frequency domain resource in the at least one first frequency domain resource; or a second frequency domain resource in the at least one first frequency domain resource indicated by the second device.

Exemplarily, the first device may select the second frequency domain resource corresponding to the i-th hopping of the first message from second frequency domain resources in the at least one first frequency domain resource based on a calculation result obtained by performing a modulo operation on the ID of the first device (which may also be the ID of the device group to which the first device belongs, or the ID of the second device) and a number of the second frequency domain resources in the at least one first frequency domain resource. For another example, the first device may determine the second frequency domain resource randomly selected from the at least one first frequency domain resource (which may also be the predefined second frequency domain resource in the at least one first frequency domain resource, or the second frequency domain resource in the at least one first frequency domain resource indicated by the second device) as the second frequency domain resource corresponding to the i-th hopping of the first message.

Exemplarily, the second frequency domain resource indicated by the second device may be part or all of the at least one second frequency domain resource. For example, when the second frequency domain resource indicated by the second device is a single second frequency domain resource, the second frequency domain resource indicated by the second device may be the second frequency domain resource corresponding to the i-th hopping. That is, the first device may determine a second frequency domain resource from the at least one second frequency domain resource except the second frequency domain resource indicated by the second device, based on a predefined rule (such as a predefined relationship between a second frequency domain resource corresponding to a (i+1)-th hopping of the first message and a second frequency domain resource corresponding to an i-th hopping of the first message) and the second frequency domain resource indicated by the second device.

Exemplarily, the second frequency domain resource randomly selected from the at least one first frequency domain resource may be part or all of the at least one second frequency domain resource. For example, when the second frequency domain resource randomly selected from the at least one first frequency domain resource is a single second frequency domain resource, the second frequency domain resource randomly selected from the at least one first frequency domain resource may be the second frequency domain resource corresponding to the i-th hopping. That is, the first device may determine a second frequency domain resource from the at least one second frequency domain resource except the randomly-selected second frequency domain resource, based on a predefined rule (such as a predefined relationship between a second frequency domain resource corresponding to a (i+1)-th hopping of the first message and a second frequency domain resource corresponding to an i-th hopping of the first message) and the randomly-selected second frequency domain resource\.

In some embodiments, a relationship between a second frequency domain resource corresponding to a (i+1)-th hopping of the first message in the at least one first frequency domain resource and a second frequency domain resource corresponding to an i-th hopping of the first message in the at least one first frequency domain resource is predefined, indicated by the second device, determined by the first device based on a predefined rule, or determined by agreement between the first device and the second device.

Exemplarily, the relationship between the second frequency domain resource corresponding to the (i+1)-th hopping of the first message and the second frequency domain resource corresponding to the i-th hopping of the first message (hereinafter referred to as a resource relationship) may be predefined. For example, the resource relationship may be implemented by pre-storing corresponding codes and tables in devices (for example, including the first device and the second device) or other manners for indicating relevant information. The resource relationship may be agreed by a protocol. The "protocol" may refer to a standard protocol in the field of communications, for example, the protocol may include an LTE protocol, an NR protocol, WiFi, and relevant protocols applied to future communication systems. The resource relationship may be indicated by the second device (for example, it may be semi-statically configured, or dynamically configured, or preempted and indicated by the second device to the first device). For example, before sending the first message to the second device, the first device may receive a signal that is sent by the second device and includes information for indicating the resource relationship. The resource relationship may be determined by the first device based on the predefined rule. For example, the first device may generate the resource relationship using a predefined pattern generation manner based on a number of second frequency domain resources in one first frequency domain resource. The resource relationship may be determined by agreement between the first device and the second device. For example, before sending the first message to the second device, the first device may agree on the resource relationship with the second device through a handshake mechanism.

In some embodiments, the method 200 may further include the following operation.

The at least one first frequency domain resource is determined based on available candidate frequency domain resources from multiple candidate frequency domain resources.

Exemplarily, when the first device is a zero-power device, communication between the first device and the second device is zero-power communication, and the multiple candidate frequency domain resources may be frequency domain resources obtained by dividing an operation frequency band of the zero-power communication (such as resources corresponding to a channel or multiple carriers). It is to be noted that the zero-power communication may be applied to a cellular system or a WiFi system, which is not specifically limited in the disclosure.

Exemplarily, the multiple available candidate frequency domain resources may be part or all of the multiple candidate frequency domain resources.

In some embodiments, the at least one first frequency domain resource is determined from the available candidate frequency domain resources based on at least one of: an ID of the first device; an ID of a device group to which the first device belongs; an ID of the second device; a candidate frequency domain resource randomly selected from the available candidate frequency domain resources; or a candidate frequency domain resource from the available candidate frequency domain resources indicated by the second device.

Exemplarily, the first device may select the at least one first frequency domain resource from the available candidate frequency domain resources based on a calculation result obtained by performing a modulo operation on the ID of the first device (which may also be the ID of the device group to which the first device belongs, or the ID of the second device) and a number of the available candidate frequency domain resources. For another example, the first device may determine the candidate frequency domain resource randomly selected from the available candidate frequency domain resources (which may also be a predefined candidate frequency domain resource from the available candidate frequency domain resources, or the candidate frequency domain resource from the available candidate frequency domain resources indicated by the second device) as the at least one first frequency domain resource.

In some embodiments, the available candidate frequency domain resources are candidate frequency domain resources available for a device of the same type as the first device. For example, when the first device is a zero-power device, the available candidate frequency domain resources are candidate frequency domain resources available for the zero-power device.

In some embodiments, the available candidate frequency domain resources are predefined, indicated by the second device, determined by the first device based on a predefined rule, or determined by agreement between the first device and the second device.

Exemplarily, the available candidate frequency domain resources may be predefined. For example, the available candidate frequency domain resources may be implemented by pre-storing corresponding codes and tables in devices (for example, including the first device and the second device) or other manners for indicating relevant information. The available candidate frequency domain resources may be agreed by a protocol. The "protocol" may refer to a standard protocol in the field of communications, for example, the protocol may include an LTE protocol, an NR protocol, WiFi, and relevant protocols applied to future communication systems. The available candidate frequency domain resources may be indicated by the second device (for example, they may be semi-statically configured, or dynamically configured, or preempted and indicated by the second device to the first device). For example, before sending the first message to the second device, the first device may receive a signal that is sent by the second device and includes information for indicating the available candidate frequency domain resources. The available candidate frequency domain resources may be determined by the first device based on the predefined rule. For example, the first device may determine candidate frequency domain resources at default positions from the multiple candidate frequency domain resources as the available candidate frequency domain resources. The available candidate frequency domain resources may be determined by agreement between the first device and the second device. For example, before sending the first message to the second device, the first device may agree on the available candidate frequency domain resources with the second device through a handshake mechanism.

In some embodiments, the multiple candidate frequency domain resources do not overlap with each other, or there are overlapped areas between part of the multiple candidate frequency domain resources.

Exemplarily, when the multiple candidate frequency domain resources do not overlap with each other, if the at least one first frequency domain resource used by the first message includes multiple first frequency domain resources, the multiple first frequency domain resources do not overlap with each other. When there are overlapped areas between part of the multiple candidate frequency domain resources, if the at least one first frequency domain resource used by the first message includes multiple first frequency domain resources, the multiple first frequency domain resources may not overlap with each other, or there may be overlapped areas between part of the multiple first frequency domain resources.

In some embodiments, the at least one second frequency domain resource is a frequency domain resource dedicated to the first device, or the at least one second frequency domain resource is a frequency domain resource shared by the first device with other devices.

Exemplarily, when the at least one second frequency domain resource is the frequency domain resource dedicated to the first device, the first device and other devices may send the first message on the second frequency domain resource in the at least one first frequency domain resource in a frequency division multiplexing (FDM) manner. In other words, the second frequency domain resource in the at least one first frequency domain resource is a frequency domain resource used by the first device and other devices for the FDM. For example, the first device sends the first message on the at least one second frequency domain resource, and other devices send messages to the second device on second frequency domain resources in the at least one first frequency domain resource except the at least one second frequency domain resource.

Exemplarily, when the at least one second frequency domain resource is the frequency domain resource shared by the first device with other devices, the first device and other devices may send the first message on the at least one second frequency domain resource in a time division multiplexing (TDM) manner. In other words, the at least one second frequency domain resource is a frequency domain resource used by the first device and other devices for the TDM. For example, the first device and other devices send messages to the second device on different time domain resources on the at least one second frequency domain resource.

Exemplarily, assuming that the first device is a zero-power device, multiple zero-power devices (including the first device) send reporting messages (the first message is a reporting message of the first device) to the second device in the FDM manner once or multiple times on one or more first frequency domain resources, and determine to stop sending the reporting messages or retransmit the reporting messages based on received messages. When different zero-power devices send reporting messages by using the same first frequency domain resource, the zero-power devices may send reporting messages by using the same or different second frequency domain resources in the first frequency domain resource. For example, there may be multiple SCs in the first frequency domain resource, and different zero-power devices may send reporting messages by using the same SC (in the TDM manner) or different SCs (in the FDM manner).

In some embodiments, a time domain resource of the first message is predefined, indicated by the second device, determined by the first device based on a predefined rule, or determined by agreement between the first device and the second device.

Exemplarily, the time domain resource of the first message may be predefined. For example, the time domain resource of the first message may be implemented by pre-storing corresponding codes and tables in devices (for example, including the first device and the second device) or other manners for indicating relevant information. The time domain resource of the first message may be agreed by a protocol. The "protocol" may refer to a standard protocol in the field of communications, for example, the protocol may include an LTE protocol, an NR protocol, WiFi, and relevant protocols applied to future communication systems. The time domain resource of the first message may be indicated by the second device (for example, it may be semi-statically configured, or dynamically configured, or preempted and indicated by the second device to the first device). For example, before sending the first message to the second device, the first device may receive a signal that is sent by the second device and includes information for indicating the time domain resource of the first message. The time domain resource of the first message may be determined by the first device based on the predefined rule. For example, the first device may determine a default time domain resource as the time domain resource of the first message. The time domain resource of the first message may be determined by agreement between the first device and the second device. For example, before sending the first message to the second device, the first device may agree on the time domain resource of the first message with the second device through a handshake mechanism.

In some embodiments, a start position or an end position of a time domain resource of the first message is determined according to at least one of: an ID of the first device; an ID of a device group to which the first device belongs; an ID of the second device; a time window of the first message; or a time domain position where a duration elapsed after receiving a third message is a first duration. The third message is configured to control, trigger or instruct the first device to send the first message.

Exemplarily, the first device may determine a time unit for sending the first message based on a calculation result obtained by performing a modulo operation on the ID of the first device (which may also be the ID of the device group to which the first device belongs, or the ID of the second device) and the time window. The first device may randomly select a time unit within the time window of the first message to send the first message. The first device may determine the time domain position where the duration elapsed after receiving the third message is the first duration as the start position or the end position of the time domain resource of the first message. The first duration may be a length of one or more time units, and the time unit includes, but is not limited to a frame, a subframe, a slot, or a symbol, etc.

Exemplarily, the time window of the first message may be indicated by the second device. For example, the time window of the first message may be semi-statically configured, or dynamically configured, or preempted and indicated by the second device to the first device.

In some embodiments, when a sending manner of the first message is a frequency hopping sending manner, a length of the time window of the first message is equal to or greater than a time length of continuous frequency hopping of the first message.

Exemplarily, when the first device sends the first message in a frequency hopping manner, the time length of continuous frequency hopping of the first message may be less than or equal to the time window of the first message. In other words, if the time window includes K time units, the first device sends the first message in the frequency hopping manner on M (M≤K) time units.

The time units for frequency hopping sending of the first device and other devices may be the same or different.

Exemplarily, when the length of the time window of the first message is equal to the time length of continuous frequency hopping of the first message, each time unit within the time window of the first message is used for sending the first message. In other words, if the time window of the first message includes K time units, when the length of the time window of the first message is equal to the time length of continuous frequency hopping of the first message, the first device may perform frequency hopping sending of the first message on each of the K time units.

Exemplarily, when the length of the time window of the first message is greater than the time length of continuous frequency hopping of the first message, part of time units within the time window of the first message are used for sending the first message, and the remaining time units are not used for sending the first message. In other words, if the time window of the first message includes K time units, when the length of the time window of the first message is greater than the time length of continuous frequency hopping of the first message, the first device may perform frequency hopping sending of the first message on part of the K time units, and the remaining time units are not used for sending the first message.

FIG. 23 is an example where a length of a time window of a first message is equal to a time length of continuous frequency hopping of the first message provided by an embodiment of the disclosure.

As illustrated in FIG. 23, UE1 may send the first message to the second device multiple times in a frequency hopping sending manner on CH9_2, CH9_4, CH9_6 and CH9_8 (that is, multiple second frequency domain resources) in CH9 (that is, the at least one first frequency domain resource). UE2 may send the first message to the second device multiple times in the frequency hopping sending manner on CH9_4, CH9_6, CH9_8 and CH9_10 (that is, multiple second frequency domain resources) in CH9 (that is, the at least one first frequency domain resource). UE3 may send the first message to the second device multiple times in the frequency hopping sending manner on CH9_6, CH9_8, CH9_10 and CH9_2 (that is, multiple second frequency domain resources) in CH9 (that is, the at least one first frequency domain resource).

If the time window of the first message includes time domain resources 1~4, UE1, UE2 and UE3 may send the first message in the frequency hopping manner on each of the time domain resources 1~4. That is, the length of the time window of the first message is equal to the time length of continuous frequency hopping of the first message.

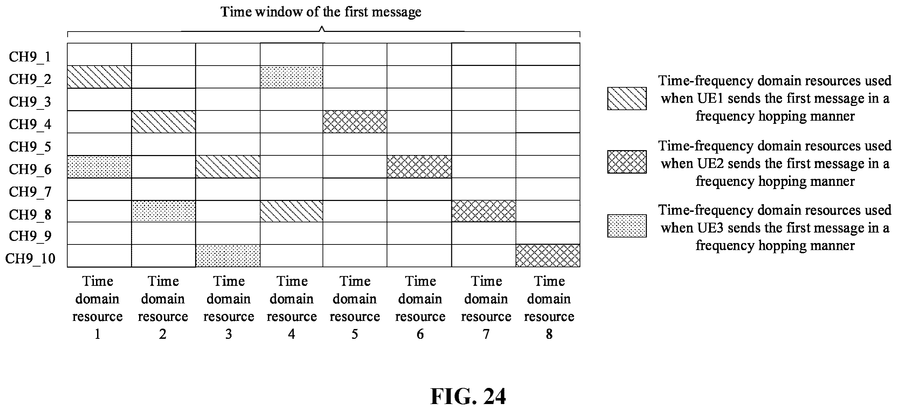

FIG. 24 is an example where a length of a time window of a first message is greater than a time length of continuous frequency hopping of the first message provided by an embodiment of the disclosure.

As illustrated in FIG. 24, UE1 may send the first message to the second device multiple times in a frequency hopping sending manner on CH9_2, CH9_4, CH9_6 and CH9_8 (that is, multiple second frequency domain resources) in CH9 (that is, the at least one first frequency domain resource). UE2 may send the first message to the second device multiple times in the frequency hopping sending manner on CH9_4, CH9_6, CH9_8 and CH9_10 (that is, multiple second frequency domain resources) in CH9 (that is, the at least one first frequency domain resource). UE3 may send the first message to the second device multiple times in the frequency hopping sending manner on CH9_6, CH9_8, CH9_10 and CH9_2 (that is, multiple second frequency domain resources) in CH9 (that is, the at least one first frequency domain resource).

If the time window of the first message includes time domain resources 1~8, UE1, UE2 and UE3 may send the first message in the frequency hopping manner on part of the time domain resources 1~8. For example, UE1 may send the first message in the frequency hopping manner on time domain resources 1~4 from the time domain resources 1~8, UE2 may send the first message in the frequency hopping manner on time domain resources 5~8 from the time domain resources 1~8, UE3 may send the first message in the frequency hopping manner on time domain resources 1~4 from the time domain resources 1~8. That is, the length of the time window of the first message is greater than the time length of continuous frequency hopping of the first message.

In some embodiments, the operation in S220 may include the following operation.

The second message is received on part or all of second frequency domain resources in the at least one first frequency domain resource.

The second message is a message sent by the second device to the first device and other devices.

Exemplarily, the first device receives the message sent by the second device to the first device and other devices, on part or all of second frequency domain resources in the at least one first frequency domain resource, that is, other devices also receive the second message on part or all of second frequency domain resources in the at least one first frequency domain resource. In other words, the second message may be sent by using all or part of second frequency domain resources in the at least one first frequency domain resource; at this time, the first device receives the second message on corresponding all or part of the second frequency domain resources.

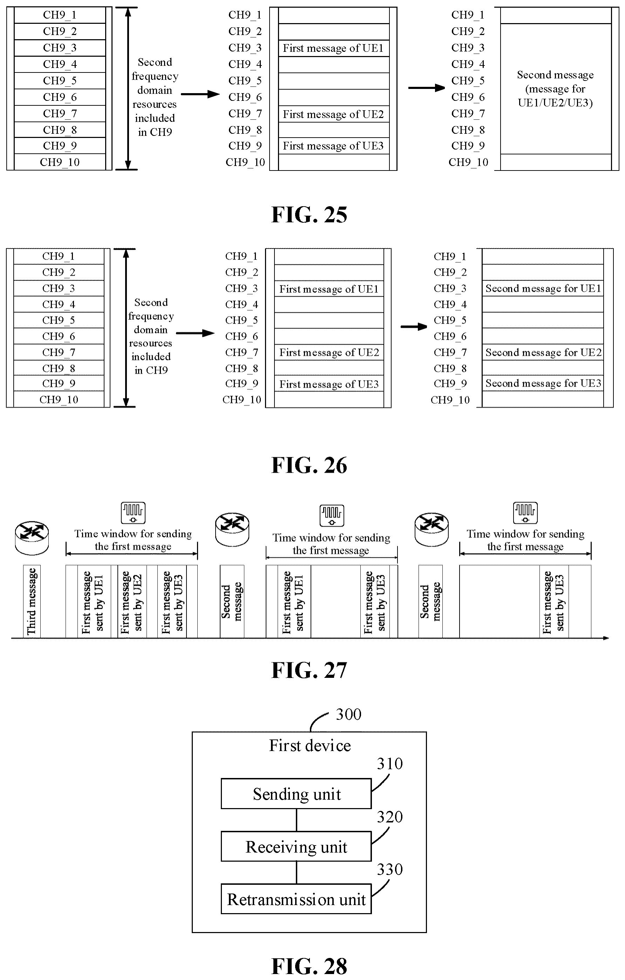

FIG. 25 is an example of frequency domain resources used by a second message provided by an embodiment of the disclosure.

As illustrated in FIG. 25, the second device may occupy CH9_3, CH9_7 and CH9 _9 (that is, multiple second frequency domain resources in the at least one first frequency domain resource) in CH9 (that is, the at least one first frequency domain resource) to send the second message. In such case, UE1, UE2 and UE3 receive the second message on the same second frequency domain resources (that is, CH9_3, CH9_7 and CH9_9 in CH9).

In some embodiments, the operation in S220 may include the following operation.

The second message is received on the at least one second frequency domain resource.

The second message is a message sent by the second device to the first device.

Exemplarily, the first device receives the message sent by the second device to the first device, on the at least one second frequency domain resource, that is, other devices receive their own information on other frequency domain resources. In other words, the second message may be sent by using the second frequency domain resource used by the first message, that is, the second message is sent on the second frequency domain resource(s) used by the first message; in such case, the first device only needs to receive the second message on the second frequency domain resource(s) where the first message is sent. It should be noted that if the at least one second frequency domain resource includes multiple second frequency domain resources, the second device repeatedly sends the second message on the multiple second frequency domain resources.

Exemplarily, if the at least one second frequency domain resource used by the first message is a single second frequency domain resource, the first device receives the second message on all second frequency domain resources from the at least one second frequency domain resource. If the at least one second frequency domain resource used by the first message includes multiple second frequency domain resources, the first device may receive the second message on part of the at least one second frequency domain resource (for example, on a second frequency domain resource used at first or at last in time). If the sending manner of the first message is the frequency hopping sending manner, the first device may receive the second message on part of the at least one second frequency domain resource (for example, on a second frequency domain resource corresponding to a first hopping or a last hopping).

FIG. 26 is an example of frequency domain resources used by a second message provided by an embodiment of the disclosure.

As illustrated in FIG. 26, the second device may occupy CH9_3, CH9_7 and CH9 _9 (that is, multiple second frequency domain resources in the at least one first frequency domain resource) in CH9 (that is, the at least one first frequency domain resource) to send the second message. In such case, UE1, UE2 and UE3 receive the second message on the same second frequency domain resources as second frequency domain resources used by the first message (for example, CH9_3 is the second frequency domain resource used by UE1, CH9_7 is the second frequency domain resource used by UE2, and CH9_9 is the second frequency domain resource used by UE3).

In some embodiments, the second message includes feedback information of the first message.

Exemplarily, the feedback information may indicate whether the first message has been successfully received by the second device. If the first message has been successfully received by the second device, sending the first message should be stopped to avoid causing interference to other devices; if the first message is not successfully received by the second device, the first message needs to be retransmitted.

In some embodiments, the second message includes a first bitmap, and the first bitmap instructs the first device to stop sending the first message or retransmit the first message.

Exemplarily, the first bitmap instructs the device group to which the first device belongs to retransmit the first message or stop sending the first message.

Exemplarily, the first bitmap instructs a device of the same type as the first device to stop sending the first message or retransmit the first message.

In some embodiments, a first bit in the first bitmap is associated with one or more second frequency domain resources in a single one of the at least one first frequency domain resource, and a value of the first bit instructs a device sending the first message by using the one or more second frequency domain resources associated with the first bit to stop sending the first message or retransmit the first message.

Exemplarily, the first bit may be any bit in the first bitmap.

Exemplarily, when multiple devices send the first message by using the second frequency domain resources associated with the first bit, the value of the first bit instructs the multiple devices to stop sending the first message or retransmit the first message.

Exemplarily, when the value of the first bit is a first numerical value, it indicates that the device sending the first message by using the second frequency domain resources associated with the first bit stops sending the first message; when the value of the first bit is a second numerical value, it indicates that the device sending the first message by using the second frequency domain resources associated with the first bit retransmits the first message. The first numerical value is 0 and the second numerical value is 1, or the first numerical value is 1 and the second numerical value is 0.

For example, if a total number of second frequency domain resources in the at least one first frequency domain resource is K, and the first device send the first message by using one of the second frequency domain resources, then a number of bits of the first bitmap may be K, and each of the bits is associated with one second frequency domain resource. When a value of a bit is a first numerical value (such as "1"), it indicates that a device sending the first message by using an associated second frequency domain resource retransmits the first message; when the value of the bit is a second numerical value (such as "0"), it indicates that the device sending the first message by using the associated second frequency domain resource stops sending the first message. If a total number of second frequency domain resources in the at least one first frequency domain resource is K, and the first device send the first message by using \second frequency domain resource groups composed of N second frequency domain resources, then a number of bits of the first bitmap may be K/N, and each of the bits is associated with one second frequency domain resource group. When a value of the bit is a first numerical value (such as "1"), it indicates that a device sending the first message by using an associated second frequency domain resource group retransmits the first message; when the value of the bit is a second numerical value (such as "0"), it indicates that the device sending the first message by using the associated second frequency domain resource group stops sending the first message.

In the embodiments, the first bit is associated with one or more second frequency domain resources, and then the device sending the first message by using the one or more second frequency domain resources associated with the first bit is instructed to stop sending the first message or retransmit the first message through the value of the first bit, which may not only achieve feedback of the first message, but also reduce a data volume of the second message, thereby improving communication performance.

Of course, in other alternative embodiments, the first bit being associated with one or more second frequency domain resources in a single one of the at least one first frequency domain resource may also be understood as or equivalently replaced as: the first bit is associated with a resource group or resource set composed of second frequency domain resources in the single one of the at least one first frequency domain resource, which is not specifically limited in the disclosure.

In some embodiments, when a sending manner of the first message is a frequency hopping sending manner, a second bit in the first bitmap is associated with a single second frequency domain resource in the first frequency domain resource, and a value of the second bit instructs a device sending an i-th hopping of the first message by using the second frequency domain resource associated with the second bit to stop sending the first message or retransmit the first message.

Exemplarily, the second bit may be any bit in the first bitmap.

Exemplarily, the i-th hopping of the first message may be a first hopping, a last hopping, or a hopping at another position.

Exemplarily, when multiple devices send the i-th hopping of the first message by using the second frequency domain resource associated with the second bit, the value of the second bit instructs the multiple devices to stop sending the first message or retransmit the first message.

Exemplarily, when the value of the second bit is a first numerical value, it indicates that the device sending the i-th hopping of the first message by using the second frequency domain resource associated with the second bit stops sending the first message; when the value of the second bit is a second numerical value, it indicates that the device sending the i-th hopping of the first message by using the second frequency domain resource associated with the second bit retransmits the first message. The first numerical value is 0 and the second numerical value is 1, or the first numerical value is 1 and the second numerical value is 0.

For example, if a total number of second frequency domain resources in the at least one first frequency domain resource is K, and the first device send the first message by using one of the second frequency domain resources, then a number of bits of the first bitmap may be K, and each of the bits is associated with one the second frequency domain resource. When a value of the bit is a first numerical value (such as "1"), it indicates that a device sending the i-th hopping of the first message by using an associated second frequency domain resource retransmits the first message; when the value of the bit is a second numerical value (such as "0"), it indicates that the device sending the i-th hopping of the first message by using the associated second frequency domain resource stops sending the first message. If a total number of second frequency domain resources in the at least one first frequency domain resource is K, and the first device send the first message by using second frequency domain resource groups composed of N second frequency domain resources, then a number of bits of the first bitmap may be K/N, and each of the bits is associated with one second frequency domain resource group. When a value of a bit is a first numerical value (such as "1"), it indicates that a device using an associated second frequency domain resource group for frequency hopping sending of the first message retransmits the first message; when the value of the bit is a second numerical value (such as "0"), it indicates that the device using the associated second frequency domain resource group for frequency hopping sending of the first message stops sending the first message.

In the embodiments, the second bit is associated with the i-th hopping of the first message, and then the device sending the i-th hopping of the first message by using the second frequency domain resource associated with the second bit is instructed to stop sending the first message or retransmit the first message through the value of the second bit, which may not only achieve feedback of the first message, but also reduce the data volume of the second message, thereby improving communication performance.

Of course, in other alternative embodiments, the value of the second bit instructs the device sending the i-th hopping of the first message by using the second frequency domain resource associated with the second bit to stop sending the first message or retransmit the first message, which may also be understood as or equivalently replaced as: the value of the second bit instructs a device sending the first message in a frequency hopping manner by using the second frequency domain resource associated with the second bit to stop sending the first message or retransmit the first message, which is not specifically limited in the disclosure. For example, when the second bit is associated with a second frequency domain resource A, even though the first device sends a first hopping of the first message by using the second frequency domain resource A, and another device different from the first device sends a second hopping of the first message by using the second frequency domain resource A, the value of the second bit instructs the device (that is, including the first device and another device) sending the first message in the frequency hopping manner by using the second frequency domain resource associated with the second bit to stop sending the first message or retransmit the first message.

It is to be noted that second frequency domain resources corresponding to frequency hopping of the first message sent by the first device may be partially or entirely the same as or different from second frequency domain resources corresponding to frequency hopping of the first message sent by other devices. For example, the first device and other devices may perform the first hopping of the first message on the same or different second frequency domain resources.

In some embodiments, when a sending manner of the first message is a frequency hopping sending manner, a third bit in the first bitmap is associated with one or more patterns of the multiple second frequency domain resources, and a value of the third bit instructs a device sending the first message by using the one or more patterns associated with the first bit to stop sending the first message or retransmit the first message.

Exemplarily, the third bit may be any bit in the first bitmap.

Exemplarily, when multiple devices send the first message by using the patterns associated with the third bit, the value of the third bit instructs the multiple devices to stop sending the first message or retransmit the first message.

Exemplarily, when the value of the third bit is a first numerical value, it indicates that the device sending the first message by using the one or more patterns associated with the third bit stops sending the first message; when the value of the third bit is a second numerical value, it indicates that the device sending the first message by using the one or more patterns associated with the third bit retransmits the first message. The first numerical value is 0 and the second numerical value is 1, or the first numerical value is 1 and the second numerical value is 0.

For example, if a total number of patterns of second frequency domain resources in the at least one first frequency domain resource is K, a number of bits of the first bitmap may be K, and each of the bits is associated with one pattern. When a value of the bit is a first numerical value (such as "1"), it indicates that a device sending the first message by using an associated pattern retransmits the first message; when the value of the bit is a second numerical value (such as "0"), it indicates that the device sending the first message by using the associated pattern stops sending the first message. If a total number of patterns of second frequency domain resources in the at least one first frequency domain resource is K, a number of bits of the first bitmap may be K/N, and each of the bits is associated with one pattern group. When a value of the bit is a first numerical value (such as "1"), it indicates that a device sending the first message in a frequency hopping manner by using an associated pattern group retransmits the first message; when the value of the bit is a second numerical value (such as "0"), it indicates that the device sending the first message in the frequency hopping manner by using the associated pattern group stops sending the first message.

In the embodiments, the third bit is associated with frequency hopping patterns of the first message, and then the device sending the first message by using the patterns associated with the third bit is instructed to stop sending the first message or retransmit the first message through the value of the third bit, which may not only achieve feedback of the first message, but also reduce the data volume of the second message, thereby improving communication performance.

Of course, in other alternative embodiments, the third bit is associated with one or more patterns of the multiple second frequency domain resources, which may also be understood as or equivalently replaced as: the third bit is associated with a pattern group or set composed of patterns of the multiple second frequency domain resources, which is not specifically limited in the disclosure. Furthermore, it should be understood that one or more patterns of the multiple second frequency domain resources may be part of the multiple patterns as mentioned above.

In some embodiments, a number of bits in the first bitmap is positively correlated with a number of second frequency domain resources in the first frequency domain resource, or the number of bits in the first bitmap is positively correlated with a number of patterns of the at least one second frequency domain resource.

Exemplarily, when the bits in the first bitmap are associated with one or more second frequency domain resources, the greater the number of second frequency domain resources in the first frequency domain resource, the greater the number of bits in the first bitmap. Similarly, when the bits in the first bitmap are associated with one or more patterns, the greater the number of patterns of second frequency domain resources in the first frequency domain resource, the greater the number of bits in the first bitmap.

In some embodiments, the second message includes at least one of an ID of the first device, or an ID of a device group to which the first device belongs.

Exemplarily, the second message includes the ID of the first device, or the second message includes the ID of the device group to which the first device belongs, or the second message includes the ID of the first device and the ID of the device group to which the first device belongs.

In the embodiments, the second message may carry the device ID of the first device and/or the ID of the device group to which the first device belongs, and the ID in the second message indicates a corresponding device or device group to retransmit the first message or stop sending the first message, which may achieve feedback of the first message. In particular, when the ID of the device group to which the first device belongs indicates the corresponding device group to retransmit the first message or stop sending the first message, the data volume of the second message may be reduced, thereby improving communication performance.

In some embodiments, the second message includes information indicating a round of the first message.

Exemplarily, the information indicating the round of the first message may be a transmission ID/index.

Exemplarily, the information indicating the round of the first message is configured to indicate (or identify, control/schedule) a round to which the first message that is retransmitted or whose sending is stopped belongs, or the information indicating the round of the first message is configured to indicate (or identify, control/schedule) that the device (or device group) retransmitting the first message or stopping sending the first message is a device (or device group) sending the first message in which round.

In the embodiments, the second message may carry the information indicating the round of the first message, and through indicating the round to which the first message that is retransmitted or whose sending is stopped belongs, not only feedback of the first message may be achieved, but also feedback may be performed on the first message at a round level, thereby improving a feedback effect of the second message.

In some embodiments, a time domain resource of the second message is predefined, indicated by the second device, determined by the first device based on a predefined rule, or determined by agreement between the first device and the second device.

Exemplarily, the time domain resource of the second message may be predefined. For example, the time domain resource of the second message may be implemented by pre-storing corresponding codes and tables in devices (for example, including the first device and the second device) or other manners for indicating relevant information. The time domain resource of the second message may be agreed by a protocol. The "protocol" may refer to a standard protocol in the field of communications, for example, the protocol may include an LTE protocol, an NR protocol, WiFi, and relevant protocols applied to future communication systems. The time domain resource of the second message may be indicated by the second device (for example, it may be semi-statically configured, or dynamically configured, or preempted and indicated by the second device to the first device). For example, before receiving the second message, the first device may receive a signal that is sent by the second device and includes information for indicating the time domain resource of the second message. The time domain resource of the second message may be determined by the first device based on the predefined rule. For example, the first device may determine a default time domain resource as the time domain resource of the second message. The time domain resource of the second message may be determined by agreement between the first device and the second device. For example, before receiving the second message, the first device may agree on the time domain resource of the second message with the second device through a handshake mechanism.

In some embodiments, a start position or an end position of a time domain resource of the second message is determined according to at least one of: a time domain position indicated by the second device; or a time domain position where a duration elapsed after the first device receives the first message is a second duration.

Exemplarily, the first device may determine the time domain position indicated by the second device as the start position or the end position of the time domain resource of the second message. For another example, the first device may determine the time domain position where the duration elapsed after receiving the first message is the second duration, as the start position or the end position of the time domain resource of the second message. The second duration may be a length of one or more time units, and the time unit includes, but is not limited to a frame, a subframe, a slot, or a symbol, etc.

In some embodiments, the operation in S210 may include the following operation.

The first message is sent to the second device in an active transmission manner or a back scattering manner.

Exemplarily, when the first device supports the active transmission manner, the first device sends the first message to the second device in the active transmission manner. When the first device supports a back scattering manner, the first device sends the first message to the second device. When the first device supports the active transmission manner and the back scattering manner, the first device may send the first message to the second device in the active transmission manner or the back scattering manner.

Exemplarily, the first message may be sent in any one of the following manners.

Manner 1: it is triggered by the second device. For example, the first device receives a message sent by the second device for triggering the first device or a device of the same type as the first device (such as an AMP IoT device) to communicate.

Manner 2: it is actively initiated by the first device. For example, the first device needs to actively report information.

Manner 3: it is triggered by an event. For example, when the first device receives an excitation signal, the first device sends the first message to the second device. The excitation signal is used by the first device to harvest power, to obtain energy for communication.

The active transmission manner may include manner 2, and the back scattering manner may include manner 1 and manner 3.

In some embodiments, the method 200 may further include the following operation.

A third message sent by the second device is received. The third message is configured to control, trigger or instruct the first device to send the first message.

Exemplarily, after receiving the third message sent by the second device, the first device sends the first message to the second device in response to the third message. In other words, after receiving a message sent by the second device to control, trigger or instruct the first device to send the first message, the first device sends the first message to the second device. Of course, in other alternative embodiments, the third message may also be configured to control, trigger or instruct a device of the same type as the first device to report information. For example, when the first device is a zero-power device, the third message is configured to control, trigger or instruct the zero-power device to report information.

Exemplarily, modulation manners used by the third message include, but are not limited to OOK, FSK, ASK, PSK, or other modulation manners.

In some embodiments, the operation in S230 may include the following operation.

The first message is retransmitted on the at least one second frequency domain resource.

Exemplarily, the first device retransmits the first message on the same frequency domain resource as a frequency domain resource used by the first message previously. In other words, when the first device needs to retransmit the first message, the first device may retransmit the first message by using a second frequency domain resource used in a previous round.

In some embodiments, the operation in S230 may include the following operation.

The first message is retransmitted on a second frequency domain resource in the at least one first frequency domain resource that is different from the at least one second frequency domain resource.

Exemplarily, the first device retransmits the first message on a frequency domain resource different from the frequency domain resource used by the first message previously. In other words, when the first device needs to retransmit the first message, the first device may retransmit the first message by using a second frequency domain resource different from the second frequency domain resource used in the previous round. For example, the first device may retransmit the first message by using a second frequency domain resource selected randomly or a second frequency domain resource determined in other manners.

FIG. 27 is an example of time domain positions among a first message, a second message and a third message provided by an embodiment of the disclosure.

As illustrated in FIG. 27, the second device sends the third message first, to trigger the first device to send the first message. Assuming that UE1, UE2 and UE3 receive the third message, UE1, UE2 and UE3 send the first message in a time window of the first message; then the second device sends the second message, to indicate sending the first message in a next round. For example, the second device instructs, through the second message, UE1 and UE3 from terminals sending the first message in a first round to send the first message in a second round. After that, the second device sends the second message, to instruct UE3 from first devices sending the first message in the second round to send the first message.

It should be noted that in other implementations, the first device may send the first message to the second device in an actively initiated communication manner. For example, the first device may send the first message to the second device in the actively initiated communication manner on a semi-statically configured time domain resource. In this case, the first device does not need to receive the third message sent by the second device, and the first device may initiate sending the first message by itself. For example, the first device initiates random access, data reporting, etc. Processes of the first device sending the first message and receiving the second message are the same as the above processes, which will not be elaborated here.

Furthermore, it is to be noted that if the first message is sent in a frequency hopping manner, when the first device needs to retransmit the first message, the first device may retransmit the first message by using a frequency hopping pattern used in a previous round, or using a new frequency hopping pattern, which is not specifically limited in the disclosure.

In some embodiments, the first message includes at least one of: an ID of the first device, or information stored in the first device.

Exemplarily, the first message includes only the ID of the first device, or the first message includes only the information stored in the first device, or the first message includes both the ID of the first device and the information stored in the first device.

Of course, in other alternative embodiments, the first message may further include other information. For example, other information includes, but is not limited to, expected time or place or other information for the next information reporting, a preamble sequence, and a Cyclic Redundancy Check (CRC) code.

In some embodiments, the information stored in the first device includes IDs of cargos stored in the first device.

Of course, in other alternative embodiments, the information stored in the first device may further include other types of information besides the IDs of cargos. For example, other types of information besides the IDs of cargos include, but are not limited to, expected time or place or other information for the next information reporting, a preamble sequence, and a CRC code.

Preferred implementations of the disclosure have been described in detail as above with reference to the drawings; however, the disclosure is not limited to specific details in the implementations as mentioned above, many simple modifications may be made to the technical solutions of the disclosure within the scope of technical concepts of the disclosure, and all of these simple modifications fall within the scope of protection of the disclosure. For example, various specific technical features described in the specific implementations as mentioned above may be combined in any suitable manner without conflict. In order to avoid unnecessary repetition, various possible combinations will not be further explained in the disclosure. For another example, various different implementations of the disclosure may also be arbitrarily combined as long as the combination does not depart from the idea of the disclosure, and the combination should also be regarded as the contents of the present application.

It should also be understood that in various method embodiments of the disclosure, a magnitude of a sequence number of each process does not mean an execution sequence and the execution sequence of each process should be determined by its function and an internal logic and should not form any limit to an implementation process of the embodiments of the disclosure.

The method embodiments of the disclosure have been described in detail as above with reference to FIG. 1 to FIG. 27, and apparatus embodiments of the disclosure will be described in detail below with reference to FIG. 28 to FIG. 31.

FIG. 28 is a schematic block diagram of a first device 300 provided by an embodiment of the disclosure.

As illustrated in FIG. 28, the first device 300 may include a sending unit 310, a receiving unit 320, and a retransmission unit 330.

The sending unit 310 is configured to send a first message to a second device on at least one second frequency domain resource in at least one first frequency domain resource. The first frequency domain resource includes one or more second frequency domain resources.

The receiving unit 320 is configured to receive a second message sent by the second device.

The retransmission unit 330 is configured to stop sending the first message or retransmit the first message based on the second message.

In some embodiments, the at least one second frequency domain resource is a single second frequency domain resource.

The sending unit 310 is specifically configured to: send the first message to the second device once on a single time domain resource on the single second frequency domain resource; or send the first message to the second device multiple times on multiple time domain resources on the single second frequency domain resource.

In some embodiments, the at least one second frequency domain resource includes multiple second frequency domain resources.

The sending unit 310 is specifically configured to: send the first message to the second device once or multiple times on a single time domain resource on the multiple second frequency domain resources; or send the first message to the second device multiple times in a frequency hopping sending manner on multiple time domain resources on the multiple second frequency domain resources.

In some embodiments, the multiple second frequency domain resources include second frequency domain resources in a single one of the at least one first frequency domain resource.

In some embodiments, when the at least one first frequency domain resource includes multiple first frequency domain resources, the multiple second frequency domain resources include second frequency domain resources in part or all of the multiple first frequency domain resources.

In some embodiments, when the at least one first frequency domain resource includes multiple first frequency domain resources, second frequency domain resources belonging to different first frequency domain resources from the multiple second frequency domain resources are located at the same or different positions in corresponding first frequency domain resources.

In some embodiments, a frequency hopping number of the first message is predefined, indicated by the second device, determined by the first device based on a predefined rule, or determined by agreement between the first device and the second device.

In some embodiments, a frequency hopping pattern of the first message is predefined, indicated by the second device, determined by the first device based on a predefined rule, or determined by agreement between the first device and the second device.

In some embodiments, the sending unit 310 is specifically configured to send the first message to the second device in the frequency hopping sending manner based on a pattern selected from multiple patterns of the multiple second frequency domain resources.

In some embodiments, the multiple patterns are predefined, indicated by the second device, determined by the first device based on a predefined rule, or determined by agreement between the first device and the second device.

In some embodiments, a second frequency domain resource corresponding to an i-th hopping of the first message in the first frequency domain resource is determined according to at least one of: an ID of the first device; an ID of a device group to which the first device belongs; an ID of the second device; a second frequency domain resource randomly selected from the at least one first frequency domain resource; a predefined second frequency domain resource in the at least one first frequency domain resource; or a second frequency domain resource in the at least one first frequency domain resource indicated by the second device.

In some embodiments, a relationship between a second frequency domain resource corresponding to a (i+1)-th hopping of the first message in the at least one first frequency domain resource and a second frequency domain resource corresponding to an i-th hopping of the first message in the at least one first frequency domain resource is predefined, indicated by the second device, determined by the first device based on a predefined rule, or determined by agreement between the first device and the second device.

In some embodiments, the sending unit 310 is further configured to determine the at least one first frequency domain resource based on available candidate frequency domain resources from multiple candidate frequency domain resources.

In some embodiments, the sending unit 310 is specifically configured to determine the at least one first frequency domain resource from the available candidate frequency domain resources based on at least one of: an ID of the first device; an ID of a device group to which the first device belongs; an ID of the second device; a candidate frequency domain resource randomly selected from the available candidate frequency domain resources; or, a candidate frequency domain resource from the available candidate frequency domain resources indicated by the second device.

In some embodiments, the available candidate frequency domain resources are candidate frequency domain resources available for a device of the same type as the first device.

In some embodiments, the available candidate frequency domain resources are predefined, indicated by the second device, determined by the first device based on a predefined rule, or determined by agreement between the first device and the second device.

In some embodiments, the multiple candidate frequency domain resources do not overlap with each other, or there are overlapped areas between part of the multiple candidate frequency domain resources.

In some embodiments, the first frequency domain resource is a resource corresponding to at least one of a channel, a system bandwidth, a carrier bandwidth, at least one BWP, at least one PRB, at least one frequency point, or multiple SCs.

In some embodiments, the second frequency domain resource is a resource corresponding to at least one of a frequency point or a SC.

In some embodiments, the at least one second frequency domain resource is a frequency domain resource dedicated to the first device, or the at least one second frequency domain resource is a frequency domain resource shared by the first device with other devices.

In some embodiments, a time domain resource of the first message is predefined, indicated by the second device, determined by the first device based on a predefined rule, or determined by agreement between the first device and the second device.

In some embodiments, a start position or an end position of a time domain resource of the first message is determined according to at least one of an ID of the first device, an ID of a device group to which the first device belongs, an ID of the second device, a time window of the first message, or a time domain position where a duration elapsed after receiving a third message is a first duration. The third message is configured to control, trigger or instruct the first device to send the first message.

In some embodiments, when a sending manner of the first message is a frequency hopping sending manner, a length of the time window of the first message is equal to or greater than a time length of continuous frequency hopping of the first message.

In some embodiments, the receiving unit 320 is specifically configured to receive the second message on part or all of second frequency domain resources in the at least one first frequency domain resource.

The second message is a message sent by the second device to the first device and other devices.

In some embodiments, the receiving unit 320 is specifically configured to receive the second message on the at least one second frequency domain resource.

The second message is a message sent by the second device to the first device.

In some embodiments, the second message includes feedback information of the first message.

In some embodiments, the second message includes a first bitmap, and the first bitmap instructs the first device to stop sending the first message or retransmit the first message.

In some embodiments, a first bit in the first bitmap is associated with one or more second frequency domain resources in a single one of the at least one first frequency domain resource, and a value of the first bit instructs a device sending the first message by using the one or more second frequency domain resources associated with the first bit to stop sending the first message or retransmit the first message.

In some embodiments, when a sending manner of the first message is a frequency hopping sending manner, a second bit in the first bitmap is associated with a single second frequency domain resource in the first frequency domain resource, and a value of the second bit instructs a device sending an i-th hopping of the first message by using the second frequency domain resource associated with the second bit to stop sending the first message or retransmit the first message.

In some embodiments, when a sending manner of the first message is a frequency hopping sending manner, a third bit in the first bitmap is associated with one or more patterns of the multiple second frequency domain resources, and a value of the third bit instructs a device sending the first message by using the one or more patterns associated with the first bit to stop sending the first message or retransmit the first message.

In some embodiments, a number of bits in the first bitmap is positively correlated with a number of second frequency domain resources in the first frequency domain resource, or the number of bits in the first bitmap is positively correlated with a number of patterns of the at least one second frequency domain resource.

In some embodiments, the second message includes at least one of an ID of the first device, or an ID of a device group to which the first device belongs.

In some embodiments, the second message includes information indicating a round of the first message.

In some embodiments, a time domain resource of the second message is predefined, indicated by the second device, determined by the first device based on a predefined rule, or determined by agreement between the first device and the second device.

In some embodiments, a start position or an end position of a time domain resource of the second message is determined according to at least one of a time domain position indicated by the second device, or a time domain position where a duration elapsed after the first device receives the first message is a second duration.

In some embodiments, the sending unit 310 is specifically configured to send the first message to the second device in an active transmission manner or a back scattering manner.

In some embodiments, the receiving unit 320 is further configured to receive a third message sent by the second device. The third message is configured to control, trigger or instruct the first device to send the first message.

In some embodiments, the retransmission unit 330 is specifically configured to: retransmit the first message on the at least one second frequency domain resource; or retransmit the first message on a second frequency domain resource in the at least one first frequency domain resource that is different from the at least one second frequency domain resource.

In some embodiments, the first message includes at least one of an ID of the first device, or information stored in the first device.

In some embodiments, the information stored in the first device includes IDs of cargos stored in the first device.

It should be understood that the apparatus embodiments and the method embodiments may correspond to each other, and similar descriptions may refer to the method embodiments. Specifically, the first device 300 illustrated in FIG. 28 may correspond to a body for performing the method for wireless communication provided in the embodiments of the disclosure, and the foregoing and other operations and/or functions of each unit in the first device 300 implement corresponding processes in various methods provided in the embodiments of the disclosure respectively, which will not be elaborated here for the sake of brevity.

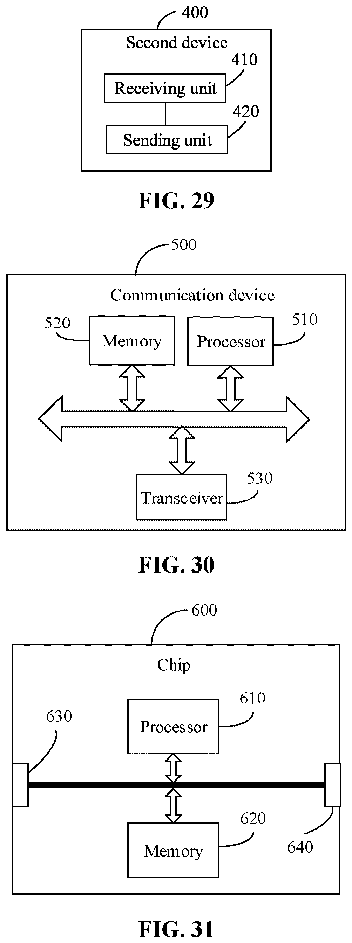

FIG. 29 is a schematic block diagram of a second device 400 provided by an embodiment of the disclosure.

As illustrated in FIG. 29, the second device 400 may include a receiving unit 410 and a sending unit 420.

The receiving unit 410 is configured to receive a first message sent by a first device on at least one second frequency domain resource in at least one first frequency domain resource. The first frequency domain resource includes one or more second frequency domain resources.

The sending unit 420 is configured to send a second message to the second device.

In some embodiments, the at least one second frequency domain resource is a single second frequency domain resource.

The receiving unit 410 is specifically configured to: receive the first message sent by the first device once on a single time domain resource on the single second frequency domain resource; or receive the first message sent by the first device multiple times on multiple time domain resources on the single second frequency domain resource.

In some embodiments, the at least one second frequency domain resource includes multiple second frequency domain resources.

The receiving unit 410 is specifically configured to: receive the first message sent by the first device once or multiple times on a single time domain resource on the multiple second frequency domain resources; or receive the first message sent by the first device multiple times in a frequency hopping sending manner on multiple time domain resources on the multiple second frequency domain resources.

In some embodiments, the multiple second frequency domain resources include second frequency domain resources in a single one of the at least one first frequency domain resource.

In some embodiments, when the at least one first frequency domain resource includes multiple first frequency domain resources, the multiple second frequency domain resources include second frequency domain resources in part or all of the multiple first frequency domain resources.

In some embodiments, when the at least one first frequency domain resource includes multiple first frequency domain resources, second frequency domain resources belonging to different first frequency domain resources from the multiple second frequency domain resources are located at the same or different positions in corresponding first frequency domain resources.

In some embodiments, a frequency hopping number of the first message is predefined, indicated by the second device, determined by the first device based on a predefined rule, or determined by agreement between the first device and the second device.

In some embodiments, a frequency hopping pattern of the first message is predefined, indicated by the second device, determined by the first device based on a predefined rule, or determined by agreement between the first device and the second device.

In some embodiments, the receiving unit 410 is specifically configured to receive the first message sent by the first device multiple times in the frequency hopping sending manner based on a pattern selected from multiple patterns of the multiple second frequency domain resources.

In some embodiments, the multiple patterns are predefined, indicated by the second device, determined by the first device based on a predefined rule, or determined by agreement between the first device and the second device.

In some embodiments, a second frequency domain resource corresponding to an i-th hopping of the first message in the first frequency domain resource is determined according to at least one of: an ID of the first device; an ID of a device group to which the first device belongs; an ID of the second device; a second frequency domain resource randomly selected from the at least one first frequency domain resource; a predefined second frequency domain resource in the at least one first frequency domain resource; or a second frequency domain resource in the at least one first frequency domain resource indicated by the second device.

In some embodiments, a relationship between a second frequency domain resource corresponding to a (i+1)-th hopping of the first message in the at least one first frequency domain resource and a second frequency domain resource corresponding to an i-th hopping of the first message in the at least one first frequency domain resource is predefined, indicated by the second device, determined by the first device based on a predefined rule, or determined by agreement between the first device and the second device.

In some embodiments, the receiving unit 410 is further configured to determine the at least one first frequency domain resource based on available candidate frequency domain resources from multiple candidate frequency domain resources.

In some embodiments, the receiving unit 410 is specifically configured to determine the at least one first frequency domain resource from the available candidate frequency domain resources based on at least one of an ID of the first device, an ID of a device group to which the first device belongs, an ID of the second device, a candidate frequency domain resource randomly selected from the available candidate frequency domain resources, or a candidate frequency domain resource from the available candidate frequency domain resources indicated by the second device.

In some embodiments, the available candidate frequency domain resources are candidate frequency domain resources available for a device of the same type as the first device.

In some embodiments, the available candidate frequency domain resources are predefined, indicated by the second device, determined by the first device based on a predefined rule, or determined by agreement between the first device and the second device.

In some embodiments, the multiple candidate frequency domain resources do not overlap with each other, or there are overlapped areas between part of the multiple candidate frequency domain resources.

In some embodiments, the first frequency domain resource is a resource corresponding to at least one of a channel, a system bandwidth, a carrier bandwidth, at least one BWP, at least one PRB, at least one frequency point, or multiple SCs.

In some embodiments, the second frequency domain resource is a resource corresponding to at least one of a frequency point or a SC.

In some embodiments, the at least one second frequency domain resource is a frequency domain resource dedicated to the first device, or the at least one second frequency domain resource is a frequency domain resource shared by the first device with other devices.

In some embodiments, a time domain resource of the first message is predefined, indicated by the second device, determined by the first device based on a predefined rule, or determined by agreement between the first device and the second device.

In some embodiments, a start position or an end position of a time domain resource of the first message is determined according to at least one of: an ID of the first device; an ID of a device group to which the first device belongs; an ID of the second device; a time window of the first message; or a time domain position where a duration elapsed after receiving a third message is a first duration. The third message is configured to control, trigger or instruct the first device to send the first message.

In some embodiments, when a sending manner of the first message is a frequency hopping sending manner, a length of the time window of the first message is equal to or greater than a time length of continuous frequency hopping of the first message.

In some embodiments, the sending unit 420 is specifically configured to receive the second message on part or all of second frequency domain resources in the at least one first frequency domain resource.

The second message is a message sent by the second device to the first device and other devices.

In some embodiments, the sending unit 420 is specifically configured to send the second message to the second device on the at least one second frequency domain resource.

The second message is a message sent by the second device to the first device.

In some embodiments, the second message includes feedback information of the first message.

In some embodiments, the second message includes a first bitmap, and the first bitmap instructs the first device to stop sending the first message or retransmit the first message.

In some embodiments, a first bit in the first bitmap is associated with one or more second frequency domain resources in a single one of the at least one first frequency domain resource, and a value of the first bit instructs a device sending the first message by using the one or more second frequency domain resources associated with the first bit to stop sending the first message or retransmit the first message.

In some embodiments, when a sending manner of the first message is a frequency hopping sending manner, a second bit in the first bitmap is associated with a single second frequency domain resource in the first frequency domain resource, and a value of the second bit instructs a device sending an i-th hopping of the first message by using the second frequency domain resource associated with the second bit to stop sending the first message or retransmit the first message.

In some embodiments, when a sending manner of the first message is a frequency hopping sending manner, a third bit in the first bitmap is associated with one or more patterns of the multiple second frequency domain resources, and a value of the third bit instructs a device sending the first message by using the one or more patterns associated with the first bit to stop sending the first message or retransmit the first message.

In some embodiments, a number of bits in the first bitmap is positively correlated with a number of second frequency domain resources in the first frequency domain resource, or the number of bits in the first bitmap is positively correlated with a number of patterns of the at least one second frequency domain resource.

In some embodiments, the second message includes at least one of an ID of the first device, or an ID of a device group to which the first device belongs.

In some embodiments, the second message includes information indicating a round of the first message.

In some embodiments, a time domain resource of the second message is predefined, indicated by the second device, determined by the first device based on a predefined rule, or determined by agreement between the first device and the second device.

In some embodiments, a start position or an end position of a time domain resource of the second message is determined according to at least one of a time domain position indicated by the second device, or a time domain position where a duration elapsed after the first device receives the first message is a second duration.

In some embodiments, the first message is a message sent by the first device in an active transmission manner or a back scattering manner.

In some embodiments, the sending unit 420 is further configured to send a third message to the first device. The third message is configured to control, trigger or instruct the first device to send the first message.

In some embodiments, the receiving unit 410 is further configured to: receive the first message retransmitted by the first device on the at least one second frequency domain resource; or receive the first message retransmitted by the first device on a second frequency domain resource in the at least one first frequency domain resource that is different from the at least one second frequency domain resource.

In some embodiments, the first message includes at least one of an ID of the first device, or information stored in the first device.

In some embodiments, the information stored in the first device includes IDs of cargos stored in the first device.

It should be understood that the apparatus embodiments and the method embodiments may correspond to each other, and similar descriptions may refer to the method embodiments. Specifically, the second device 400 illustrated in FIG. 29 may correspond to a body for performing the method for wireless communication provided in the embodiments of the disclosure, and the foregoing and other operations and/or functions of each unit in the second device 400 implement corresponding processes in various methods provided in the embodiments of the disclosure respectively, which will not be elaborated here for the sake of brevity.

The communication device of the embodiments of the disclosure is described as above from the perspective of functional modules with reference to the drawings. It should be understood that the functional modules may be implemented in a form of hardware, or may be implemented by instructions in a form of software, or may be implemented by a combination of hardware and software modules. Specifically, each operation of the method embodiments in the embodiments of the disclosure may be completed by an integrated logic circuit of hardware in the processor or instructions in a software form. The operations of the methods disclosed in combination the embodiments of the disclosure may be directly embodied to be executed and completed by a hardware decoding processor or executed and completed by a combination of hardware and software modules in the decoding processor. In an embodiment, the software module may be located in a mature storage medium in the art, such as a Random Access Memory (RAM), a flash memory, a Read-Only Memory (ROM), a Programmable ROM (PROM), an Electrically Erasable PROM (EEPROM) or a register. The storage medium is located in a memory. The processor reads information from the memory and completes the operations of the foregoing methods in combination with the hardware of the processor.

For example, the sending unit or the receiving unit as mentioned above may be implemented by a transceiver.

FIG. 30 is a schematic structural diagram of a communication device 500 provided by an embodiment of the disclosure.

As illustrated in FIG. 30, the communication device 500 may include a processor 510.

The processor 510 may call and run a computer program from a memory to implement the methods in the embodiments of the disclosure.

As illustrated in FIG. 30, the communication device 500 may further include a memory 520.

The memory 520 may be configured to store information, and may also be configured to store codes, instructions or the like executable by the processor 510. The processor 510 may call and run a computer program from the memory 520 to implement the methods in the embodiments of the disclosure. The memory 520 may be a separate device independent of the processor 510, or may be integrated into the processor 510.

As illustrated in FIG. 30, the communication device 500 may further include a transceiver 530.

The processor 510 may control the transceiver 530 to communicate with other devices. Specifically, the processor 510 may control the transceiver 530 to send information or data to other devices, or to receive information or data sent by other devices. The transceiver 530 may include a transmitter and a receiver. The transceiver 530 may further include one or more antennas.

It should be understood that various components in the communication device 500 are connected through a bus system. The bus system includes a power bus, a control bus and a status signal bus, in addition to a data bus.

It should also be understood that the communication device 500 may be the terminal device in the embodiments of the disclosure, and the communication device 500 may implement corresponding processes implemented by the terminal device in various methods of the embodiments of the disclosure, that is, the communication device 500 of the embodiment of the disclosure may correspond to the first device 300 in the embodiments of the disclosure, and may correspond to a body for performing the method 200 according to the embodiments of the disclosure, which will not be elaborated here for the sake of brevity. Similarly, the communication device 500 may be the network device in the embodiments of the disclosure, and the communication device 500 may implement corresponding processes implemented by the network device in various methods of the embodiments of the disclosure. That is, the communication device 500 of the embodiment of the disclosure may correspond to the second device 400 in the embodiments of the disclosure, and may correspond to a body for performing the method 300 according to the embodiments of the disclosure, which will not be elaborated here for the sake of brevity.

Furthermore, an embodiment of the disclosure further provides a chip.

For example, the chip may be an integrated circuit chip with a signal processing capability, and may implement or perform various methods, operations and logic block diagrams disclosed in the embodiments of the disclosure. The chip may also be referred to as a system-level chip, a system chip, a chip system or a system on chip, etc. In an embodiment, the chip may be applied to various communication devices, to enable the communication device mounted with the chip to perform various methods, operations and logic block diagrams disclosed in the embodiments of the disclosure.

FIG. 31 is a schematic structural diagram of a chip 600 provided by an embodiment of the disclosure.

As illustrated in FIG. 31, the chip 600 includes a processor 610.

The processor 610 may call and run a computer program from a memory to implement the methods in the embodiments of the disclosure.

As illustrated in FIG. 31, the chip 600 may further include a memory 620.

The processor 610 may call and run a computer program from the memory 620 to implement the methods in the embodiments of the disclosure. The memory 620 may be configured to store indication information, and may also be configured to store codes, instructions or the like executable by the processor 610. The memory 620 may be a separate device independent of the processor 610, or may be integrated into the processor 610.

As illustrated in FIG. 31, the chip 600 may further include an input interface 630.

The processor 610 may control the input interface 630 to communicate with other devices or chips, and specifically, the processor 610 may control the input interface 630 to acquire information or data sent by other devices or chips.

As illustrated in FIG. 31, the chip 600 may further include an output interface 640.

The processor 610 may control the output interface 640 to communicate with other devices or chips, and specifically, the processor 610 may control the output interface 640 to output information or data to other devices or chips.

It should be understood that the chip 600 may be applied to the network device in the embodiments of the disclosure, and the chip may implement corresponding processes implemented by the network device in various methods of the embodiments of the disclosure, and may also implement corresponding processes implemented by the terminal device in various methods of the embodiments of the disclosure, which will not be elaborated here for the sake of brevity.

It should also be understood that various components in the chip 600 are connected through a bus system. The bus system includes a power bus, a control bus and a status signal bus, in addition to a data bus.

The processor as mentioned above may include, but is not limited to a general purpose processor, a Digital Signal Processor (DSP), an Application Specific Integrated Circuit (ASIC), a Field Programmable Gate Array (FPGA) or other programmable logical devices, a discrete component gate or transistor logic device, a discrete hardware component, etc.

The processor may be configured to implement or execute various methods, operations and logic block diagrams disclosed in the embodiments of the disclosure. Operations of the methods disclosed in combination with the embodiments of the disclosure may be directly embodied to be executed and completed by a hardware decoding processor or executed and completed by a combination of hardware and software modules in the decoding processor. The software modules may be located in a mature storage medium in this field such as a RAM, a flash memory, a ROM, a PROM or an EEPROM, a register, etc. The storage medium is located in a memory, and the processor reads information in the memory, and completes the operations of the methods as mentioned above in combination with the hardware thereof.

The memory as mentioned above includes, but is not limited to, a volatile memory and/or a non-volatile memory. The non-volatile memory may be a ROM, a PROM, an Erasable PROM (EPROM), an EEPROM, or a flash memory. The volatile memory may be a RAM, which is used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM).

It is to be noted that the memory described in the disclosure is intended to include memories of these and any other proper types.

An embodiment of the disclosure further provides a computer-readable storage medium. The computer-readable storage medium is configured to store a computer program. The computer-readable storage medium stores one or more programs, and the one or more programs include instructions. When the instructions are executed by a portable electronic device including multiple application programs, the instructions enable the portable electronic device to perform the methods for wireless communication provided in the disclosure.

For example, the computer-readable storage medium may be applied to the first device in the embodiments of the disclosure, and the computer program enables the computer to perform corresponding processes implemented by the first device in various methods of the embodiments of the disclosure, which will not be elaborated here for the sake of brevity. For another example, the computer-readable storage medium may be applied to the second device in the embodiments of the disclosure, and the computer program enables the computer to perform corresponding processes implemented by the second device in methods of the embodiments of the disclosure, which will not be elaborated here for the sake of brevity.

An embodiment of the disclosure further provides a computer program product including a computer program.

For example, the computer program product may be applied to the first device in the embodiments of the disclosure, and the computer program enables the computer to perform corresponding processes implemented by the first device in various methods of the embodiments of the disclosure, which will not be elaborated here for the sake of brevity. For another example, the computer program product may be applied to the second device in the embodiments of the disclosure, and the computer program enables the computer to perform corresponding processes implemented by the second device in various methods of the embodiments of the disclosure, which will not be elaborated here for the sake of brevity.

An embodiment of the disclosure further provides a computer program. When the computer program is executed by a computer, the computer program enables the computer to perform the methods for wireless communication provided in the disclosure.

For example, the computer program may be applied to the first device in the embodiments of the disclosure, and when the computer program is executed on a computer, the computer program enables the computer to perform corresponding processes implemented by the first device in various methods of the embodiments of the disclosure, which will not be elaborated here for the sake of brevity. For another example, the computer program may be applied to the second device in the embodiments of the disclosure, and when the computer program is executed on a computer, the computer program enables the computer to perform corresponding processes implemented by the second device in various methods of the embodiments of the disclosure, which will not be elaborated here for the sake of brevity.

The disclosure further provides a communication system. The communication system may include the first device and the second device as mentioned above, to form the communication system 100 as illustrated in FIG. 1, which will not be elaborated here for the sake of brevity. It should be noted that a term "system" or the like in the disclosure may also be referred to as a "network management architecture", or a "network system", etc.

It should also be understood that terms used in the embodiments of the disclosure and the appended claims are only for the purpose of describing specific embodiments, and are not intended to limit the embodiments of the disclosure. For example, singular forms "a", "the", "the above" and "this" used in the embodiments of the disclosure and the appended claims are also intended to include plural forms, unless the context clearly indicates other meanings.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the embodiments of the disclosure. When being realized in form of software functional unit and sold or used as an independent product, the function may be stored in a computer-readable storage medium. Based on such an understanding, the technical solutions of the disclosure substantially or parts making contributions to the conventional art or part of the technical solutions may be embodied in form of software product, and the computer software product is stored in a storage medium, including multiple instructions configured to enable a computer device (which may be a personal computer, a server, a communication device or the like) to execute all or part of the operations of the method in embodiments of the disclosure. The abovementioned storage medium includes: various media capable of storing program codes such as a U disk, a mobile hard disk, a ROM, a RAM, a magnetic disk or an optical disk.

Those skilled in the art may learn about that specific working processes of the system, apparatus and unit described above may refer to the corresponding processes in the method embodiments and will not be elaborated herein for convenient and brief description. In some embodiments provided by the disclosure, it is to be understood that the disclosed system, apparatus and method may be implemented in another manner. For example, in the above apparatus embodiments, division of the units or modules or components is only logic function division, and there may be other division manners in an actual implementation. For example, multiple units or modules or components may be combined or integrated into another system, or some units or modules or components may be neglected or not executed. For another example, the above units/modules/components described as separate/display components may be or may not be physically separated, and namely may be located in the same place, or may also be distributed to multiple network units. Part or all of the units/modules/components may be selected to achieve the purpose of the embodiments of the disclosure according to a practical requirement. Finally, it should be noted that coupling or direct coupling or communication connection between displayed or discussed components may be indirect coupling or communication connection, implemented through some interfaces, of the device or the units, and may be electrical and mechanical or adopt other forms.

The above is only the specific implementation of the embodiments of the disclosure and not intended to limit the scope of protection of the embodiments of the disclosure. Any variations or replacements apparent to those skilled in the art within the technical scope disclosed by the embodiments of the disclosure shall fall within the scope of protection of the embodiments of the disclosure. Therefore, the scope of protection of the embodiments of the disclosure shall be subject to the scope of protection of the claims.

## Claims

1. A method for wireless communication, applied to a first device, the method comprising:
sending a first message to a second device on at least one second frequency domain resource in at least one first frequency domain resource, wherein a first frequency domain resource comprises one or more second frequency domain resources;
receiving a second message sent by the second device; and
stopping sending the first message or retransmitting the first message based on the second message.

2. The method of claim 1, wherein the at least one second frequency domain resource is a single second frequency domain resource,
sending the first message to the second device on the at least one second frequency domain resource in the at least one first frequency domain resource comprises:
sending the first message to the second device once on a single time domain resource on the single second frequency domain resource; or
sending the first message to the second device multiple times on a plurality of time domain resources on the single second frequency domain resource.

3. The method of claim 1, wherein the at least one second frequency domain resource comprises a plurality of second frequency domain resources,
sending the first message to the second device on the at least one second frequency domain resource in the at least one first frequency domain resource comprises:
sending the first message to the second device once or multiple times on a single time domain resource on the plurality of second frequency domain resources; or
sending the first message to the second device multiple times in a frequency hopping sending manner on a plurality of time domain resources on the plurality of second frequency domain resources.

4. The method of claim 3, wherein the plurality of second frequency domain resources comprise second frequency domain resources in a single one of the at least one first frequency domain resource.

5. The method of claim 3, wherein when the at least one first frequency domain resource comprises a plurality of first frequency domain resources, the plurality of second frequency domain resources comprise second frequency domain resources in part or all of the plurality of first frequency domain resources.

6. The method of claim 3, wherein when the at least one first frequency domain resource comprises a plurality of first frequency domain resources, second frequency domain resources belonging to different first frequency domain resources from the plurality of second frequency domain resources are located at the same or different positions in corresponding first frequency domain resources.

7. The method of any one of claims 3 to 6, wherein a frequency hopping number of the first message is predefined, indicated by the second device, determined by the first device based on a predefined rule, or determined by agreement between the first device and the second device.

8. The method of any one of claims 3 to 6, wherein a frequency hopping pattern of the first message is predefined, indicated by the second device, determined by the first device based on a predefined rule, or determined by agreement between the first device and the second device.

9. The method of any one of claims 3 to 6, wherein sending the first message to the second device using the frequency hopping sending manner comprises:
sending, based on a pattern selected from a plurality of patterns of the plurality of second frequency domain resources, the first message to the second device in the frequency hopping sending manner.

10. The method of claim 9, wherein the plurality of patterns are predefined, indicated by the second device, determined by the first device based on a predefined rule, or determined by agreement between the first device and the second device.

11. The method of any one of claims 3 to 6, wherein a second frequency domain resource corresponding to an i-th hopping of the first message in the first frequency domain resource is determined according to at least one of:
an identifier, ID, of the first device;
an ID of a device group to which the first device belongs;
an ID of the second device;
a second frequency domain resource randomly selected from the at least one first frequency domain resource;
a predefined second frequency domain resource in the at least one first frequency domain resource; or
a second frequency domain resource in the at least one first frequency domain resource indicated by the second device.

12. The method of any one of claims 3 to 6, wherein a relationship between a second frequency domain resource corresponding to a (i+1)-th hopping of the first message in the at least one first frequency domain resource and a second frequency domain resource corresponding to an i-th hopping of the first message in the at least one first frequency domain resource is predefined, indicated by the second device, determined by the first device based on a predefined rule, or determined by agreement between the first device and the second device.

13. The method of any one of claims 1 to 12, further comprising:
determining the at least one first frequency domain resource based on available candidate frequency domain resources from a plurality of candidate frequency domain resources.

14. The method of claim 13, wherein determining the at least one first frequency domain resource based on the available candidate frequency domain resources from the plurality of candidate frequency domain resources comprises:
determining the at least one first frequency domain resource from the available candidate frequency domain resources based on at least one of:
an identifier, ID, of the first device;
an ID of a device group to which the first device belongs;
an ID of the second device;
a candidate frequency domain resource randomly selected from the available candidate frequency domain resources; or
a candidate frequency domain resource from the available candidate frequency domain resources indicated by the second device.

15. The method of claim 13, wherein the available candidate frequency domain resources are candidate frequency domain resources available for a device of the same type as the first device.

16. The method of claim 13, wherein the available candidate frequency domain resources are predefined, indicated by the second device, determined by the first device based on a predefined rule, or determined by agreement between the first device and the second device.

17. The method of claim 13, wherein the plurality of candidate frequency domain resources do not overlap with each other, or there are overlapped areas between part of the plurality of candidate frequency domain resources.

18. The method of any one of claims 1 to 17, wherein the first frequency domain resource is a resource corresponding to at least one of a channel, a system bandwidth, a carrier bandwidth, at least one Bandwidth Part, BWP, at least one Physical Resource Block, PRB, at least one frequency point, or a plurality of subcarriers, SCs.

19. The method of any one of claims 1 to 18, wherein a second frequency domain resource is a resource corresponding to at least one of a frequency point or a subcarrier, SC.

20. The method of any one of claims 1 to 19, wherein the at least one second frequency domain resource is a frequency domain resource dedicated to the first device, or the at least one second frequency domain resource is a frequency domain resource shared by the first device with other devices.

21. The method of any one of claims 1 to 20, wherein a time domain resource of the first message is predefined, indicated by the second device, determined by the first device based on a predefined rule, or determined by agreement between the first device and the second device.

22. The method of any one of claims 1 to 20, wherein a start position or an end position of a time domain resource of the first message is determined according to at least one of:
an identifier, ID, of the first device;
an ID of a device group to which the first device belongs;
an ID of the second device;
a time window of the first message; or
a time domain position where a duration elapsed after receiving a third message is a first duration, wherein the third message is configured to control, trigger or instruct the first device to send the first message.

23. The method of claim 22, wherein when a sending manner of the first message is a frequency hopping sending manner, a length of the time window of the first message is equal to or greater than a time length of continuous frequency hopping of the first message.

24. The method of any one of claims 1 to 23, wherein receiving the second message sent by the second device comprises:
receiving the second message on part or all of second frequency domain resources in the at least one first frequency domain resource,
wherein the second message is a message sent by the second device to the first device and other devices.

25. The method of any one of claims 1 to 23, wherein receiving the second message sent by the second device comprises:
receiving the second message on the at least one second frequency domain resource,
wherein the second message is a message sent by the second device to the first device.

26. The method of any one of claims 1 to 25, wherein the second message comprises feedback information of the first message.

27. The method of any one of claims 1 to 26, wherein the second message comprises a first bitmap, and the first bitmap instructs the first device to stop sending the first message or retransmit the first message.

28. The method of claim 27, wherein a first bit in the first bitmap is associated with one or more second frequency domain resources in a single one of the at least one first frequency domain resource, and a value of the first bit instructs a device sending the first message by using the one or more second frequency domain resources associated with the first bit to stop sending the first message or retransmit the first message.

29. The method of claim 27, wherein when a sending manner of the first message is a frequency hopping sending manner, a second bit in the first bitmap is associated with a single second frequency domain resource in the first frequency domain resource, and a value of the second bit instructs a device sending an i-th hopping of the first message by using the second frequency domain resource associated with the second bit to stop sending the first message or retransmit the first message.

30. The method of claim 27, wherein when a sending manner of the first message is a frequency hopping sending manner, a third bit in the first bitmap is associated with one or more patterns of the plurality of second frequency domain resources, and a value of the third bit instructs a device sending the first message by using the one or more patterns associated with the first bit to stop sending the first message or retransmit the first message.

31. The method of any one of claims 27 to 30, wherein a number of bits in the first bitmap is positively correlated with a number of second frequency domain resources in the first frequency domain resource, or the number of bits in the first bitmap is positively correlated with a number of patterns of the at least one second frequency domain resource.

32. The method of any one of claims 1 to 31, wherein the second message comprises at least one of an identifier, ID, of the first device, or an ID of a device group to which the first device belongs.

33. The method of any one of claims 1 to 32, wherein the second message comprises information indicating a round of the first message.

34. The method of any one of claims 1 to 33, wherein a time domain resource of the second message is predefined, indicated by the second device, determined by the first device based on a predefined rule, or determined by agreement between the first device and the second device.

35. The method of any one of claims 1 to 34, wherein a start position or an end position of a time domain resource of the second message is determined according to at least one of:
a time domain position indicated by the second device; or
a time domain position where a duration elapsed after the first device receives the first message is a second duration.

36. The method of any one of claims 1 to 35, wherein sending the first message to the second device comprises:
sending the first message to the second device in an active transmission manner or a back scattering manner.

37. The method of any one of claims 1 to 36, further comprising:
receiving a third message sent by the second device, wherein the third message is configured to control, trigger or instruct the first device to send the first message.

38. The method of any one of claims 1 to 37, wherein retransmitting the first message comprises:
retransmitting the first message on the at least one second frequency domain resource; or
retransmitting the first message on a second frequency domain resource in the at least one first frequency domain resource that is different from the at least one second frequency domain resource.

39. The method of any one of claims 1 to 38, wherein the first message comprises at least one of an identifier, ID, of the first device, or information stored in the first device.

40. The method of claim 39, wherein the information stored in the first device comprises IDs of cargos stored in the first device.

41. A method for wireless communication, applied to a second device, comprising:
receiving a first message sent by a first device on at least one second frequency domain resource in at least one first frequency domain resource, wherein a first frequency domain resource comprises one or more second frequency domain resources; and
sending a second message to the second device.

42. The method of claim 41, wherein the at least one second frequency domain resource is a single second frequency domain resource,
receiving the first message sent by the first device on the at least one second frequency domain resource in the at least one first frequency domain resource comprises:
receiving the first message sent by the first device once on a single time domain resource on the single second frequency domain resource; or
receiving the first message sent by the first device multiple times on a plurality of time domain resources on the single second frequency domain resource.

43. The method of claim 41, wherein the at least one second frequency domain resource comprises a plurality of second frequency domain resources,
receiving the first message sent by the first device on the at least one second frequency domain resource in the at least one first frequency domain resource comprises:
receiving the first message sent by the first device once or multiple times on a single time domain resource on the plurality of second frequency domain resources; or
receiving the first message sent by the first device multiple times in a frequency hopping sending manner on a plurality of time domain resources on the plurality of second frequency domain resources.

44. The method of claim 43, wherein the plurality of second frequency domain resources comprise second frequency domain resources in a single one of the at least one first frequency domain resource.

45. The method of claim 43, wherein when the at least one first frequency domain resource comprises a plurality of first frequency domain resources, the plurality of second frequency domain resources comprise second frequency domain resources in part or all of the plurality of first frequency domain resources.

46. The method of claim 43, wherein when the at least one first frequency domain resource comprises a plurality of first frequency domain resources, second frequency domain resources belonging to different first frequency domain resources from the plurality of second frequency domain resources are located at the same or different positions in corresponding first frequency domain resources.

47. The method of any one of claims 43 to 46, wherein a frequency hopping number of the first message is predefined, indicated by the second device, determined by the first device based on a predefined rule, or determined by agreement between the first device and the second device.

48. The method of any one of claims 43 to 46, wherein a frequency hopping pattern of the first message is predefined, indicated by the second device, determined by the first device based on a predefined rule, or determined by agreement between the first device and the second device.

49. The method of any one of claims 43 to 46, wherein receiving the first message sent by the first device multiple times in the frequency hopping sending manner comprises:
receiving, based on a pattern selected from a plurality of patterns of the plurality of second frequency domain resources, the first message sent by the first device multiple times in the frequency hopping sending manner.

50. The method of claim 49, wherein the plurality of patterns are predefined, indicated by the second device, determined by the first device based on a predefined rule, or determined by agreement between the first device and the second device.

51. The method of any one of claims 43 to 46, wherein a second frequency domain resource corresponding to an i-th hopping of the first message in the first frequency domain resource is determined according to at least one of:
an identifier, ID, of the first device;
an ID of a device group to which the first device belongs;
an ID of the second device;
a second frequency domain resource randomly selected from the at least one first frequency domain resource;
a predefined second frequency domain resource in the at least one first frequency domain resource; or
a second frequency domain resource in the at least one first frequency domain resource indicated by the second device.

52. The method of any one of claims 43 to 46, wherein a relationship between a second frequency domain resource corresponding to a (i+1)-th hopping of the first message in the at least one first frequency domain resource and a second frequency domain resource corresponding to an i-th hopping of the first message in the at least one first frequency domain resource is predefined, indicated by the second device, determined by the first device based on a predefined rule, or determined by agreement between the first device and the second device.

53. The method of any one of claims 41 to 52, further comprising:
determining the at least one first frequency domain resource based on available candidate frequency domain resources from a plurality of candidate frequency domain resources.

54. The method of claim 53, wherein determining the at least one first frequency domain resource based on the available candidate frequency domain resources from the plurality of candidate frequency domain resources comprises:
determining the at least one first frequency domain resource from the available candidate frequency domain resources based on at least one of:
an identifier, ID, of the first device;
an ID of a device group to which the first device belongs;
an ID of the second device;
a candidate frequency domain resource randomly selected from the available candidate frequency domain resources; or
a candidate frequency domain resource from the available candidate frequency domain resources indicated by the second device.

55. The method of claim 53, wherein the available candidate frequency domain resources are candidate frequency domain resources available for a device of the same type as the first device.

56. The method of claim 53, wherein the available candidate frequency domain resources are predefined, indicated by the second device, determined by the first device based on a predefined rule, or determined by agreement between the first device and the second device.

57. The method of claim 53, wherein the plurality of candidate frequency domain resources do not overlap with each other, or there are overlapped areas between part of the plurality of candidate frequency domain resources.

58. The method of any one of claims 41 to 57, wherein the first frequency domain resource is a resource corresponding to at least one of a channel, a system bandwidth, a carrier bandwidth, at least one Bandwidth Part, BWP, at least one Physical Resource Block, PRB, at least one frequency point, or a plurality of subcarriers, SCs.

59. The method of any one of claims 41 to 58, wherein the second frequency domain resource is a resource corresponding to at least one of a frequency point or a subcarrier, SC.

60. The method of any one of claims 41 to 59, wherein the at least one second frequency domain resource is a frequency domain resource dedicated to the first device, or the at least one second frequency domain resource is a frequency domain resource shared by the first device with other devices.

61. The method of any one of claims 41 to 60, wherein a time domain resource of the first message is predefined, indicated by the second device, determined by the first device based on a predefined rule, or determined by agreement between the first device and the second device.

62. The method of any one of claims 41 to 60, wherein a start position or an end position of a time domain resource of the first message is determined according to at least one of:
an identifier, ID, of the first device;
an ID of a device group to which the first device belongs;
an ID of the second device;
a time window of the first message; or
a time domain position where a duration elapsed after receiving a third message is a first duration, wherein the third message is configured to control, trigger or instruct the first device to send the first message.

63. The method of claim 62, wherein when a sending manner of the first message is a frequency hopping sending manner, a length of the time window of the first message is equal to or greater than a time length of continuous frequency hopping of the first message.

64. The method of any one of claims 41 to 63, wherein receiving the second message sent by the second device comprises:
receiving the second message on part or all of second frequency domain resources in the at least one first frequency domain resource,
wherein the second message is a message sent by the second device to the first device and other devices.

65. The method of any one of claims 41 to 63, wherein sending the second message to the second device comprises:
sending the second message to the second device on the at least one second frequency domain resource,
wherein the second message is a message sent by the second device to the first device.

66. The method of any one of claims 41 to 65, wherein the second message comprises feedback information of the first message.

67. The method of any one of claims 41 to 66, wherein the second message comprises a first bitmap, and the first bitmap instructs the first device to stop sending the first message or retransmit the first message.

68. The method of claim 67, wherein a first bit in the first bitmap is associated with one or more second frequency domain resources in a single one of the at least one first frequency domain resource, and a value of the first bit instructs a device sending the first message by using the one or more second frequency domain resources associated with the first bit to stop sending the first message or retransmit the first message.

69. The method of claim 67, wherein when a sending manner of the first message is a frequency hopping sending manner, a second bit in the first bitmap is associated with a single second frequency domain resource in the first frequency domain resource, and a value of the second bit instructs a device sending an i-th hopping of the first message by using the second frequency domain resource associated with the second bit to stop sending the first message or retransmit the first message.

70. The method of claim 67, wherein when a sending manner of the first message is a frequency hopping sending manner, a third bit in the first bitmap is associated with one or more patterns of the plurality of second frequency domain resources, and a value of the third bit instructs a device sending the first message by using the one or more patterns associated with the first bit to stop sending the first message or retransmit the first message.

71. The method of any one of claims 67 to 70, wherein a number of bits in the first bitmap is positively correlated with a number of second frequency domain resources in the first frequency domain resource, or the number of bits in the first bitmap is positively correlated with a number of patterns of the at least one second frequency domain resource.

72. The method of any one of claims 41 to 71, wherein the second message comprises at least one of an identifier, ID, of the first device, or an ID of a device group to which the first device belongs.

73. The method of any one of claims 41 to 72, wherein the second message comprises information indicating a round of the first message.

74. The method of any one of claims 41 to 73, wherein a time domain resource of the second message is predefined, indicated by the second device, determined by the first device based on a predefined rule, or determined by agreement between the first device and the second device.

75. The method of any one of claims 41 to 74, wherein a start position or an end position of a time domain resource of the second message is determined according to at least one of:
a time domain position indicated by the second device; or
a time domain position where a duration elapsed after the first device receives the first message is a second duration.

76. The method of any one of claims 41 to 75, wherein the first message is a message sent by the first device in an active transmission manner or a back scattering manner.

77. The method of any one of claims 41 to 76, further comprising:
sending a third message to the first device, wherein the third message is configured to control, trigger or instruct the first device to send the first message.

78. The method of any one of claims 41 to 77, further comprising:
receiving the first message retransmitted by the first device on the at least one second frequency domain resource; or
receiving the first message retransmitted by the first device on a second frequency domain resource in the at least one first frequency domain resource that is different from the at least one second frequency domain resource.

79. The method of any one of claims 41 to 78, wherein the first message comprises at least one of an identifier, ID, of the first device, or information stored in the first device.

80. The method of claim 79, wherein the information stored in the first device comprises IDs of cargos stored in the first device.

81. A method for wireless communication, applied to a first device, comprising:
a sending unit, configured to send a first message to a second device on at least one second frequency domain resource in at least one first frequency domain resource, wherein a first frequency domain resource comprises one or more second frequency domain resources;
a receiving unit, configured to receive a second message sent by the second device; and
a retransmission unit, configured to stop sending the first message or retransmit the first message based on the second message.

82. A method for wireless communication, applied to a second device, comprising:
a receiving unit, configured to receive a first message sent by a first device on at least one second frequency domain resource in at least one first frequency domain resource, wherein a first frequency domain resource comprises one or more second frequency domain resources; and
a sending unit, configured to send a second message to the second device.

83. A first device, comprising: a transceiver, a processor and a memory, wherein
the memory is configured to store a computer program, and
the processor is configured to call and run the computer program stored in the memory, to cause the transceiver and/or the processor to perform the method of any one of claims 1 to 40.

84. A second device, comprising: a transceiver, a processor and a memory, wherein
the memory is configured to store a computer program, and
the processor is configured to call and run the computer program stored in the memory, to cause the transceiver and/or the processor to perform the method of any one of claims 41 to 80.

85. A chip, comprising:
a processor, configured to call and run a computer program from a memory, to cause a device mounted with the chip to perform the method of any one of claims 1 to 40 or the method of any one of claims 41 to 80.

86. A computer-readable storage medium, configured to store a computer program, wherein the computer program, when executed on a computer, enables the computer to perform the method of any one of claims 1 to 40 or the method of any one of claims 41 to 80.

87. A computer program product, comprising computer program instructions, wherein the computer program instructions enable a computer to perform the method of any one of claims 1 to 40 or the method of any one of claims 41 to 80.

88. A computer program, enabling a computer to perform the method of any one of claims 1 to 40 or the method of any one of claims 41 to 80.
